(19) Europäisches Patentamt / European Patent Office / Office européen des brevets

(11) **EP 4 293 757 B1**

(12) **EUROPEAN PATENT SPECIFICATION**

(45) Date of publication and mention
of the grant of the patent:
**29.01.2025 Bulletin 2025/05**

(21) Application number: **22752770.2**

(22) Date of filing: **09.02.2022**

(51) International Patent Classification (IPC):
*H01M 4/86* (2006.01)    *H01M 4/88* (2006.01)
*H01M 4/92* (2006.01)    *H01M 4/96* (2006.01)
*H01M 8/10* (2016.01)    *H01M 8/1004* (2016.01)

(52) Cooperative Patent Classification (CPC):
**H01M 4/88; H01M 4/8807; H01M 4/881;**
**Y02E 60/50**

(86) International application number:
**PCT/JP2022/005080**

(87) International publication number:
**WO 2022/172947 (18.08.2022 Gazette 2022/33)**

(54) **METHOD OF PRODUCING ELECTRODE CATALYST, METHOD OF PRODUCING GAS DIFFUSION ELECTRODE, AND METHOD OF PRODUCING MEMBRANE/ELECTRODE ASSEMBLY**

VERFAHREN ZUR HERSTELLUNG EINES ELEKTRODENKATALYSATORS, VERFAHREN ZUR HERSTELLUNG EINER GASDIFFUSIONSELEKTRODE UND VERFAHREN ZUR HERSTELLUNG EINER MEMBRAN-/ELEKTRODENANORDNUNG

PROCÉDÉ DE PRODUCTION DE CATALYSEUR D'ÉLECTRODE, PROCÉDÉ DE PRODUCTION D'ÉLECTRODE DE DIFFUSION DE GAZ, ET PROCÉDÉ DE PRODUCTION D'ENSEMBLE MEMBRANE/ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2021 JP 2021019012**

(43) Date of publication of application:
**20.12.2023 Bulletin 2023/51**

(73) Proprietor: **N.E. Chemcat Corporation**
**Tokyo 105-6124 (JP)**

(72) Inventors:
• **NAGAMORI, Kiyotaka**
  **Tokyo 1056124 (JP)**
• **MIZUSAKI, Tomoteru**
  **Tokyo 1056124 (JP)**
• **AOKI, Satoshi**
  **Tokyo 1056124 (JP)**
• **NAKAMURA, Yoko**
  **Tokyo 1056124 (JP)**
• **SEKI, Yasuhiro**
  **Tokyo 1056124 (JP)**

(74) Representative: **Mewburn Ellis LLP**
**Aurora Building**
**Counterslip**
**Bristol BS1 6BX (GB)**

(56) References cited:
**WO-A1-2019/221168     CA-A1- 2 764 768**
**JP-A- 2008 269 850     JP-A- 2012 529 722**
**JP-A- 2017 073 356     JP-A- 2017 091 736**
**US-A1- 2016 099 473     US-B2- 9 379 388**

**Description**

TECHNICAL FIELD

The present invention relates to a method of producing an electrode catalyst having a porous carbon as a support. More specifically, the present invention relates to a method of producing an electrode catalyst suitably used for a gas diffusion electrode, and to a method of producing an electrode catalyst suitably used for a gas diffusion electrode of a fuel cell.

Further, the present invention relates to a method of producing a gas diffusion electrode and a method of producing a membrane-electrode assembly, which contain the electrode catalyst obtained by the above-mentioned method of producing an electrode catalyst.

BACKGROUND ART

Polymer electrolyte fuel cells (Polymer Electrolyte Fuel Cell: hereinafter referred to as "PEFC" as needed) are being researched and developed as power sources for fuel cell vehicles and household cogeneration systems.

A noble metal catalyst composed of noble metal particles of a platinum group element such as platinum (Pt) is used for a catalyst used for a gas diffusion electrode of a PEFC.

For example, as a typical conventional catalyst, a "Pt supported carbon catalyst" (hereinafter, referred to as "Pt/C catalyst" as needed) is known which is a powder of catalyst particles in which Pt fine particles are supported on a conductive carbon powder support.

As a production method for improving the performance of an electrode catalyst, Non-Patent Document 1 and Non-Patent Document 2 disclose that a carbon support is subjected to a nitric acid treatment, to reaction with ammonia gas, and then finally catalyst particles are supported on the carbon support (referring to the descriptions of "Experimental" on P.F770-F771 of Non-Patent Document 1, "N-Functionalization of carbon", "Synthesis of 16 wt% Pt/N-KB" of Supporting Information of Non-Patent Document 2).

Here, the nitric acid treatment conditions in Non-Patent Document 1 are 70% nitric acid aqueous solution, 70 °C, and 30 minutes. In addition, the reaction conditions with ammonia gas in Non-Patent Document 1 are ammonia gas (100%, 1 L/min), 200 °C, and 4 hours.

Furthermore, the nitric acid treatment conditions in Non-Patent Document 2 are 70% nitric acid aqueous solution, 70 °C, and 2 hours. The reaction conditions with ammonia gas in Non-Patent Document 2 are ammonia gas treatment (99.98%, 10 L/min), 200 °C, 400 °C, 600 °C, 2.5 hours.

The electrode catalysts obtained by Non-Patent Document 1 and Non-Patent Document 2 are believed that nitrogen-containing functional groups are yielded on the surface of the carbon support. It has also been reported that when this electrode catalyst is used in the catalyst layer of the cathode of the MEA, the ionomer dispersion state in the catalyst layer is improved, thereby improving the power generation performance of the MEA.

Further, Non-Patent Document 3 reports a case of using a carbon material doped with nitrogen as a heteroatom (atoms other than carbon and hydrogen) as a support for a Pt catalyst. In this case, it is reported that the nitrogen doping promotes the nucleation of Pt on the support, resulting in the formation of Pt nanoparticles with small size and uniformity. In addition, in this case, the mechanism of improvement of oxygen reduction activity by metal-support interaction and spillover is proposed.

As a support of an electrode catalyst, there are porous carbon having many pores inside the primary particle and solid carbon having fewer pores inside the primary particle compared with the porous carbon, and studies have been made for improving performance utilizing the respective characteristics thereof.

For example, Patent Document 1 discloses an example of an investigation in which porous carbon is adopted as a support. In addition, Patent Document 2 discloses an example of an investigation in which solid carbon is adopted as a support.

For example, in Patent Document 1, as to a porous support (porous carbon) 220 having an average particle diameter of 20 to 100 nm, there is disclosed a configuration of an electrode catalyst 200 in which a pore volume and a mode diameter of the pore distribution of a pore P220 having a pore diameter of 4 to 20 nm are controlled in predetermined ranges, and a catalyst particle 230 is supported in a primary pore P220 of the support 220.

In Patent Document 1, it is mentioned that, thereby, adsorption of the polymer electrolyte on the surface of the catalyst particles 230 existing in the primary pore P220 is prevented, and the gas transportability can be sufficiently secured while preventing the effective reaction surface area of the catalyst from being lowered. Furthermore, as a result, it has been mentioned that a catalyst layer for a fuel cell exhibiting excellent power generation performance can be provided in which the activity per catalyst weight is improved even when the amount of catalyst is reduced.

Further, for example, Patent Document 2 discloses an electrode catalyst (PtCo/C catalyst) for a fuel cell having a solid carbon support and a catalyst particle containing an alloy of platinum and cobalt supported on the support. The electrode catalyst has a molar ratio of platinum to cobalt of 4 to 11:1 in the alloy and is acid treated at 70 to 90 °C.

In Patent Document 2, when a Pt/Co alloy is supported on a porous carbon support, a part of Pt/Co alloy is encompassed inside the porous carbon support, and even if an acid treatment for suppressing elution of Co is performed, it is difficult to sufficiently treat Pt/Co alloy present inside the support, and as a result, Co is easily eluted from Pt/Co alloy present inside the support, and it has been viewed as a problem.

Therefore, in Patent Document 2, it is mentioned that, by using a solid carbon support instead of a porous carbon support, it is possible to avoid inclusion of a Pt/Co alloy inside the support. In addition, thus, it is disclosed that it becomes possible to sufficiently acid-treat the Pt/Co alloy and to suppress the elution of Co. It is mentioned that it is possible to balance both the initial performance and durability performance of the fuel cell, as a result.

Here, in Patent Document 2, the solid carbon is defined as follows.

Namely, it is referred in Patent Document 2 that the solid carbon is a carbon having fewer voids inside carbon as compared with a porous carbon, and specifically, a carbon in which a ratio (t-Pot surface area/BET surface area) of BET surface area determined by N2 adsorption to outer surface area by t-Plot (surface area outside particle was calculated from particle diameter) is 40% or more.

Note that the "t-Plot surface area" described in Patent Document 2 is understood to indicate, for example, "t-plot (t-plot) surface area" described in the technical report " Analysis of Micropore Surface Area by t-plot Method" published on the internet by "MCEvatec Co., Ltd" on February 1, 2019 . The analysis of the micropore surface area by t-plot method is one of the methods to analyze from the adsorption isotherm (adsorption temperature: 77K) of nitrogen. This method is a method to compare and convert the data of adsorption isotherm with the standard isotherm, and to graph the relationship between thickness t of adsorption layer and adsorption amount. In addition to the fact that the specific surface area can be separated into the inside and the outside of the pores and quantified, the tendency of the pores can be known from the shape of the graph.

Patent Document 4 discloses a method for producing a catalyst, Pt supported on a carbon support, which has been treated in an ammonia gas, where the ammonia gas treatment takes place before the introduction of the catalyst particles onto the support.

Examples of the solid carbon include, for example, the carbon described in Japanese Patent No. 4362116, and specifically, it is disclosed that Denka Black (registered trademark) available from DENKA Co., Ltd. may be exemplified.

Furthermore, Patent Document 3 discloses an electrode catalyst (core-shell catalyst) where the catalyst particles are supported both inside and outside the mesopores of the porous carbon support {more specifically, the nanopores formed in the primary particles of the porous carbon support}. This electrode catalyst has a structure that a ratio of the catalyst particles supported inside the mesopore {more specifically, the nanopores formed in the primary particles of the porous carbon support} is 50% or more when an analysis of a particle diameter distribution of the catalyst particles is performed by using a three-dimensional reconstructed image obtained by an electron beam tomography measurement using an STEM (scanning transmission electron microscopy).

Here, in the present specification, the "nanopore" of the porous carbon support means a pore having a pore diameter of 1 to 20 nm described later.

The applicant of the present patent application presents the following publications as a publication in which the known inventions described in the above publications are described.

PRIOR ART DOCUMENT

Patent Document

Patent Document 1: Japanese Un-examined Patent Application Publication No. 2013-109856
Patent Document 2: WO2016/063968
Patent Document 3: WO2019/221168
Patent Document 4: CA2764768 A1

Non-Patent Document

Non-patent Document 1: Journal of The Electrochemical Society, 165(10)F770-F779(2018)
Non-patent Document 2: Nature Materials Vol 19 (January 2020)77-85
Non-patent Document 3: Prog. Mater. Sci., 82, 445(2016)
Non-patent Document 4: Phys. Chem. Chem. Phys., 2013, 15 (27), 11236 - 1124

## SUMMARY OF THE INVENTION

Problem to be solved by the invention

In order to reduce the amount of Pt used in the MEA and reduce the material cost for the spread of PEFC, the electrode catalyst is required to further improve the catalytic activity, more specifically, to further improve the catalytic activity in the catalyst layer of the MEA electrode.

The present inventors have conducted a nitriding treatment using ammonia gas described in Non-Patent Document 1 and Non-Patent Document 2 mentioned above with respect to an electrode catalyst in which a plurality of catalyst particles containing Pt are supported on a carbon support, and have found that, by adopting a method different from the methods disclosed in Non-Patent Document 1 and Non-Patent Document 2, it is possible to provide an electrode catalyst which can contribute the further improvement of the polarization characteristics of the cathode and improvement of the MEA performance.

The present invention has been made in view of such technical circumstances, and an object of the present invention is to provide a method of producing an electrode catalyst having excellent catalytic activity and excellent durability in an electrode catalyst layer of MEA for a PEFC.

Further object of the present invention is to provide a method of producing a gas diffusion electrode and a method of producing a membrane-electrode assembly (MEA), which contain the electrode catalyst obtained by the above-mentioned method of producing an electrode catalyst.

Means to solve the problems

The present inventors have intensively conducted the nitriding treatment using ammonia gas described in Non-Patent Document 1 and Non-Patent Document 2 mentioned above with respect to an electrode catalyst in which a plurality of catalyst particles containing Pt are supported on a carbon support.

As a result, by adopting the following method, which is different from the methods disclosed in Non-Patent Document 1 and Non-Patent Document 2, an electrode catalyst having excellent catalytic activity and excellent durability in the electrode catalyst layer of the MEA can be exactly obtained, and the present invention has been completed.

More specifically, the present invention is composed of the following technical matters.

Namely, in a first aspect, the present invention provides a method of producing an electrode catalyst according to claim 1.

As described above, in the production method of the present invention, at first, a powder in which the catalyst particles are supported on the porous carbon support is prepared (first step), and then treated with the ammonia gas (second step). On the other hand, in the production methods of Non-Patent Document 1 and Non-Patent Document 2 described above, there are employed the procedures in which, initially, the carbon support is treated with the ammonia gas, and then the catalyst particles are supported on the carbon support that has been treated with the ammonia gas. In this point, the production method of the present invention is different from those of Non-Patent Document 1, Non-Patent Document 2 and Non-Patent Document 3 described above.

The treatment in the ammonia gas after supporting the catalyst particles on the porous carbon support means that the effect of supporting the catalyst particles on the ammonia-treated support described in Non-Patent Document 3 cannot be obtained. Further, when the catalyst particles are supported on the porous carbon support and then treated in the ammonia gas, there is a possibility that the catalyst particles may accelerate the decomposition reaction of ammonia, and there is a possibility that the nitrogen-containing functional groups presumed to be yielded on the surface of the carbon support described in Non-Paten Document 1 and Non-Patent Document 2 are not yielded sufficiently, or that different types of functional groups are yielded.

However, the present inventors dared to use a procedure different from the conventional technology, that is, to support catalyst particles on the porous carbon support and then treat in the ammonia gas, and have found that the electrode catalyst having excellent catalytic activity and excellent durability in the electrode catalyst layer of the MEA can be exactly obtained.

When treating the powder in which the catalyst particles are supported on the porous carbon support in ammonia gas under the reaction conditions of the second step, the electrode catalyst obtained by the production method of the present invention can exhibit excellent catalytic activity and excellent durability in the electrode catalyst layer of the MEA.

Detailed reasons why the electrode catalyst of the present invention has the excellent catalytic activity and excellent durability have not been fully elucidated. However, the present inventors consider as follows.

That is, according to the previous experiment by using a commercially available porous carbon (Ketjen Black EC300J, BET specific surface area 750 to 800 $m^2/g$) which was carried by the present inventors, when analytically comparing (comparison of the state of the catalyst only, and the state of the catalyst layer in which the catalyst and the ionomer are mixed) the pore structure of the catalyst obtained by the production method which is the same as the production method of the present invention with that of the conventional Pt catalyst which was not subjected to the ammonia treatment, it has been found that, in comparison to the conventional Pt catalyst, in the catalyst which is produced by the production method which is the same as the production method of the present invention, the degree of each (1) clog of nanopores in the primary particle of the porous carbon, (2) clog of primary pores such as in the porous carbon agglomerates, and (3) clog of secondary pores such as between carbon agglomerates by the ionomer is remarkably decreased, and the ionomer was thinly dispersed on the carbon surface in a good state.

Then, since the experimental results of the examples described later were obtained with respect to the porous carbon support to be the object of the present invention {having nanopores having a pore diameter of 1 to 20 nm and micropores having a pore diameter of less than 1 nm and a BET specific surface area of 1000 to 1500 m$^2$/g, the present inventors consider that the same effect of suppressing uneven distribution of the ionomer obtained in the above-mentioned commercially available carbon can be obtained.

In fact, with respect to the conventional Pt catalyst (Comparative Example 1 described later) that was not treated with ammonia and the catalyst obtained by the production method of the present invention (Example 1 described later), when the present inventors conducted the catalytic activity evaluation test for oxygen reduction reaction by using RDE (Rotating Disk Electrode), the excellent initial activity and durability obtained in the MEA evaluation test for the catalyst according to the present invention could not be confirmed. Regarding this, the present inventors consider that since the I/C (ionomer mass / catalyst mass) of the catalyst layer of the electrode catalyst prepared in the RDE evaluation test is very small (for example, 1/10 to 1/5) with respect to the I/C (0.7 in the examples described later) of the cathode catalyst layer prepared in the MEA evaluation test, there is a high possibility that the effect of suppressing the uneven distribution of the ionomer in the catalyst layer by modifying the surface of the porous carbon described above is appeared remarkably in the MEA where the I/C is large.

Furthermore, according to the experiments carried out by the present inventors, when used in the catalyst layer of the MEA, it has been found that the catalyst obtained by the production method of the present invention (Example 1 described later) has more excellent catalyst utilization rate than the catalyst obtained by the conventional production method (Comparative Example 1 and Comparative Example 5 described later).

The present inventors consider that, by carrying out the ammonia treatment after supporting catalyst particles on the support according to the procedures of the present invention, the nitrogen-containing hydrophobic organic groups (for example, a cyclic organic group such as pyridine or pyrrole) on the surface of the porous carbon and the hydrophilic organic groups (including -COOH, -CHO, =C=O, -OH, etc.) which originally exist on the surface of the carbon become appropriately dispersed and distributed, and thereby uneven distribution of the ionomers is suppressed in the catalyst layer to realize the improvement in the initial performance and the catalyst utilization rate when used in the above-mentioned MEA.

Furthermore, when the catalyst obtained by the production method of the present invention is used in the MEA catalyst layer, since the ionomer clogs the nanopores of the primary particles of the porous carbon is sufficiently suppresses in comparison with the conventional catalyst obtained by the conventional production method, the present inventors consider that the contact between the ionomer and the catalyst particles within the nanopores is reduced, which results in reduced poisoning of the catalyst particles by the ionomer. Also from this point of view, the present inventors consider that the catalyst obtained by the production method of the present invention can exhibit excellent catalytic activity in the electrode catalyst layer of the MEA.

Further, since the catalyst obtained by the production method of the present invention suppresses the uneven distribution of the ionomer in the electrode catalyst layer of the MEA and the clogging of the pores due to this, and the catalyst utilization rate of the MEA catalyst layer is improved, it is considered that this also contributes to the improvement of the drainage of the catalyst layer. Therefore, it is considered that, when the MEA generates electricity (especially when generating electricity at a relatively high current density), since there are few parts with poor drainage in the catalyst layer, it is possible to sufficiently reduce that the electrode reaction is unevenly concentrated on some catalyst particles to proceed in concentrated sintering and the dissolution. Therefore, the present inventors consider that the catalyst obtained by the production method of the present invention can exhibit excellent durability in the electrode catalyst layer of the MEA.

Here, in the present invention, the "porous carbon" is a carbon having more pores (voids) inside the carbon than the solid carbon described above, and indicates a conductive carbon which partly includes the above-mentioned nanopores. Furthermore, the "nanopore" of the porous carbon support means the pore having a pore diameter of 1 to 20 nm, and the "micropore" means the pore having a pore diameter of less than 1 nm.

In the present invention, the "nanopore pore diameter" means the "inlet size of the nanopore". The "micropore pore diameter" means the "inlet size of the nanopore."

Furthermore, from the viewpoint of obtaining the effects of the present invention more exactly, it is preferable that the porous carbon support contains more nanopores having a pore diameter (size of the inlet of the pore) of 1 to 10 nm among the nanopores. It has been reported that the micellar diameter of the polyelectrolyte used for the anode and cathode catalyst layers of MEA is about 10 nm (for example, Y.S. Kim, et al, DOE Hydrogen Program Merit Review and Peer Meeting FC16, (2009)). Therefore, by using the porous carbon support containing more pores having a pore diameter (size of the inlet of the pore) of 1 to 10 nm, it becomes difficult for the polyelectrolyte to penetrate into the nanopores, and it is more reliably prevented the contact between the catalyst particles supported inside the nanopores and the polyelectrolyte.

Further, in the production method of the present invention, the concentration of the ammonia gas in the ammonia treatment in the second step is 10 to 100%. When adjusting the concentration of the ammonia gas within this range, the surface modification of the catalyst powder can be sufficiently proceeded.

Furthermore, the pressure of the ammonia gas in the ammonia treatment of the second step is 0.1 MPa to 0.5 MPa. When adjusting the pressure of the ammonia gas within this range, the modification of the surface of the catalyst powder can be sufficiently proceeded without deteriorating the catalyst powder. From the viewpoint of simplifying the structure of the reactor, the pressure of the ammonia gas is preferably 0.1 MPa to 0.2 MPa, more preferably 0.1 MPa.

Further, the temperature in the reactor in the ammonia treatment in the second step is adjusted to 500 °C or more and less than the decomposition temperature of ammonia. When adjusting the temperature in the reactor in the ammonia treatment within this range, the modification of the surface of the catalyst powder can be sufficiently proceeded.

Furthermore, the ammonia treatment in the second step is maintained at the reaction temperature described above for 5 to 10 hours. When adjusting the reaction time within this period, the modification of the surface of the catalyst powder can be sufficiently proceeded without deteriorating the catalyst powder.

Further, in the production method of the present invention, between the first step and the second step, it may be included a nitric acid treatment step where the powder obtained through the first step is dispersed in an aqueous nitric acid solution of 0.01 to 1.5 mol/L, and the resulting dispersion is held at 60 to 95 °C for 1 to 3 hours while stirring, and, after the nitric acid treatment step, a washing step where the solid component and the liquid component in the dispersion are separated, and the solid component is washed with ion-exchanged water one or more times, and a drying step where the solid components obtained through the washing step are filtered and then dried into powder.

The present inventors consider that, between the first step and the second step, by treating the powder obtained through the first step (powder in which the catalyst particles are supported on the porous carbon) appropriately with nitric acid, it is possible to modifying the organic groups (including -COOH, -CHO, =C=O, -OH, etc.)which exist on the surface of the powder partially, and the organic groups can be newly expressed (appropriately increased) on the surface of the powder, and thus the further modification of the powder surface can be made more effective by the second step of ammonia treatment which is achieved in the next step.

In the nitric acid treatment, it is preferable that the concentration of the nitric acid aqueous solution is 0.01 to 1.5 mol/L. When setting the concentration within this range, it is possible to proceed the modification of the surface of the catalyst powder with nitric acid sufficiently without oxidative deterioration of the catalyst powder. Further, it is preferable that the nitric acid treatment temperature is 60 to 95° C., and it is preferable that the nitric acid treatment time within this temperature range is 1 to 3 hours. When adjusting the nitric acid treatment temperature and time within these ranges, it is possible to proceed the modification of the surface of the catalyst powder with nitric acid sufficiently without oxidative deterioration of the catalyst powder.

From the perspective of obtaining the effects of this invention more reliably, it is preferable for the porous carbon unit to be CNovel (manufactured by TOYO TANSO Corporation, product name, registered trademark).

Here, the "porous carbon (CNovel)" refers to a porous carbon material that includes nanopores (pore diameter of 1-20 nm), micro-pores (pore diameter less than 1 nm), a carbonaceous wall that forms the outer shell of these nanopores, and the carbonaceous wall contains layered structures and forms a three-dimensional network structure, the nanopores are open pores, and they are configured to have continuous pore sections.

Furthermore, from the perspective of obtaining the effects of this invention more reliably, porous carbon as described in Patent Bulletin No. 5636171, Patent Bulletin No. 5695147, Patent Bulletin No. 5860600, Patent Bulletin No. 5860601, and Patent Bulletin No. 5860602 is preferred as the porous carbon unit (CNovel).

Among them, it is preferable for the porous carbon unit (CNovel) to contain a larger number of nanopores with pore diameters (size of pore entrance) of 1-10 nm. As mentioned earlier, there is a report stating that the micelle system of the polymer electrolyte used in the catalyst layers of the MEA has a size of approximately 10 nm (for example, Y.S. Kim et al., DOE Hydrogen Program Merit Review and Peer Meeting FC16, 2009)). Therefore, by using a porous carbon support that contains a larger number of micro-pores with pore diameters (size of pore entrance) of 1-10 nm, it becomes more difficult for the polymer electrolyte to infiltrate into the nanopores, and the contact between the catalyst particles supported inside the nanopores and the polymer electrolyte is more reliably prevented.

Further, in the electrode catalyst obtained according to the production method of the present invention, it is preferable that the catalyst particle is a catalyst particle made of Pt (0 valence) from the viewpoint of obtaining sufficient electrode reaction activity.

Furthermore, in the electrode catalyst obtained according to the production method of the present invention, at least a part of the surface of the catalyst particle may be coated with a Pt oxide film to the extent that the catalyst particle can exhibit excellent catalytic activity.

In the electrode catalyst obtained according to the production method of the present invention, it is preferable that the catalyst particle is a catalyst particle made of a PtNi alloy from the viewpoint of obtaining the electrode reaction activity exceeding that of the Pt catalyst.

Furthermore, in the electrode catalyst obtained according to the production method of the present invention, it is preferable that from the viewpoints of obtaining the electrode reaction activity and durability exceeding those of the Pt catalyst to reduce the amount of Pt used, it is preferable that the catalyst particle has a core-shell structure which has a core particle and a Pt-containing shell which covers at least a part of the surface of the core particle. Here, from the viewpoint of obtaining the excellent catalytic activity, it is preferable that the core particle is a particle made of Pd.

Further, in a second aspect, the present invention also provides a method of producing a gas diffusion electrode according to claim 7.

The gas diffusion electrode obtained by the method of producing the gas diffusion electrode of the present invention contains the electrode catalyst according to the present invention. Therefore, when used in MEA of PEFC, it becomes easy to obtain a structure having the excellent polarization characteristics.

Furthermore, in a third aspect, the present invention provides a method of producing a membrane-electrode assembly (MEA) according to claim 8.

Since the MEA obtained by the method of producing the membrane-electrode assembly (MEA) of the present invention contains the GDE produced by the method of producing the gas diffusion electrode (GDE) of the present invention described above, it becomes easy to form a structure having good battery characteristics in the MEA of the PEFC.

A fuel cell stack can be provided including the MEA produced by the method of producing the MEA of the present invention.

According to the fuel cell stack produced by the production method of the fuel cell stack of the present invention, Since the MEA produced by the method of producing the MEA of the present invention is contained, it becomes easy to form a structure having good battery characteristics when using as the MEA of the PEFC.

EFFECTS OF THE INVENTION

The present invention provides a method of producing an electrode catalyst having excellent catalytic activity and excellent durability in an electrode catalyst layer of MEA for a PEFC.

Further, the present invention provides a method of producing a gas diffusion electrode and a method of producing a membrane-electrode assembly (MEA), which contain the electrode catalyst obtained by the above-mentioned method of producing an electrode catalyst.

BRIEF DESCRIPTION OF THE DRAWINGS

Fig. 1 is a schematic cross-sectional view showing a preferred embodiment of the MEA produced by the production method of the present invention.
Fig. 2 is a schematic cross-sectional view showing a preferred embodiment of the catalyst for electrode of the present invention included in at least one of the cathode catalyst layer and the anode catalyst layer of the MEA shown in Fig. 1.
Fig. 3 is an enlarged schematic cross-sectional view showing a schematic configuration of the catalyst for electrode shown in Fig. 2.
Fig. 4 is a schematic cross-sectional view showing another preferred embodiment of the MEA produced by the production method of the present invention.
Fig. 5 is a schematic cross-sectional view showing a preferred embodiment of the CCM produced by the production method of the present invention.
Fig. 6 is a schematic cross-sectional view showing another preferred embodiment of the CCM produced by the production method of the present invention.
Fig. 7 is a schematic cross-sectional view showing a preferred embodiment of the GDE produced by the production method of the present invention.
Fig. 8 is a schematic cross-sectional view showing another preferred embodiment of the GDE produced by the production method of the present invention.
Fig. 9 is a schematic diagram showing one preferred embodiment of the fuel cell stack produced by the production method of the present invention.

MODE FOR CARRYING OUT THE INVENTION

Hereinafter, with reference to figures as appropriate, a suitable embodiment of the present invention is explained in detail.

<Membrane-electrode Assembly (MEA)>

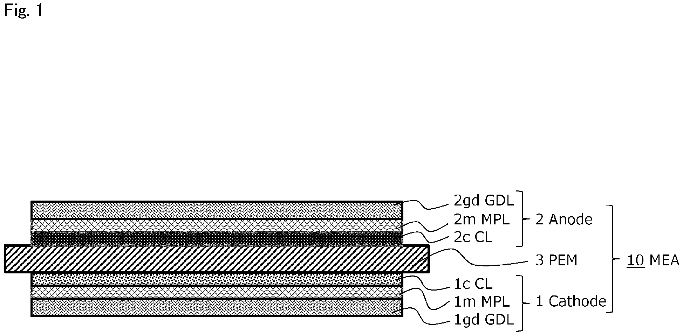

Fig. 1 is a schematic cross-sectional view showing a preferred embodiment of the MEA of the present invention.

The MEA10 shown in Fig. 1 has the configuration provided with two gas diffusion electrodes (the cathode 1 and the anode 2) having the shape of a plate arranged in the state opposing each other, and the polymer electrolyte membrane (Polymer Electrolyte Membrane, hereinafter referred to as "PEM" if needed) 3 arranged between the cathode 1 and the anode 2.

In this MEA10, at least one of the cathode 1 and the anode 2 has a configuration in which an electrode catalyst 20 to be described later is contained.

The MEA10 can be produced by laminating the cathode 1, the anode 2, and the PEM 3 as shown in Fig. 1 and then applying a pressure to adhere.

<Gas Diffusion Electrode (GDE)>

The cathode 1 as a gas diffusion electrode has a configuration including a gas diffusion layer 1gd and a catalyst layer 1c, which is formed on the PEM 3 side surface of the gas diffusion layer 1gd. Further, the cathode 1 has a water repellent layer (Micro Porous Layer, hereinafter, referred to as "MPL" as needed) 1m arranged between the gas diffusion layer 1gd and the catalyst layer 1c.

Similarly to the cathode 1, the anode 2, which is a gas diffusion electrode, has a configuration including a gas diffusion layer 2gd and a catalyst layer 2c, which is formed on the PEM 3 side surface of the gas diffusion layer 2gd, and a MPL 2m, which is arranged between the gas diffusion layer 2gd and the catalyst layer 2c.

(Catalyst layer (CL))

In the cathode 1, the catalyst layer 1c is a layer in which a reaction proceeds such that water is generated from air (oxygen gas) sent from the gas diffusion layer 1gd and hydrogen ions moving through the PEM 3 from the anode 2.

In addition, in the anode 2, the catalyst layer 2c is a layer in which a reaction in which hydrogen ions and electrons are generated from hydrogen gas sent from the gas diffusion layer 2gd proceeds.

At least one of the catalyst layer 1c of the cathode 1 and the catalyst layer 2c of the anode 2 includes the electrode catalyst 20 of the present invention.

(Preferred embodiment of the electrode catalyst of the present invention)

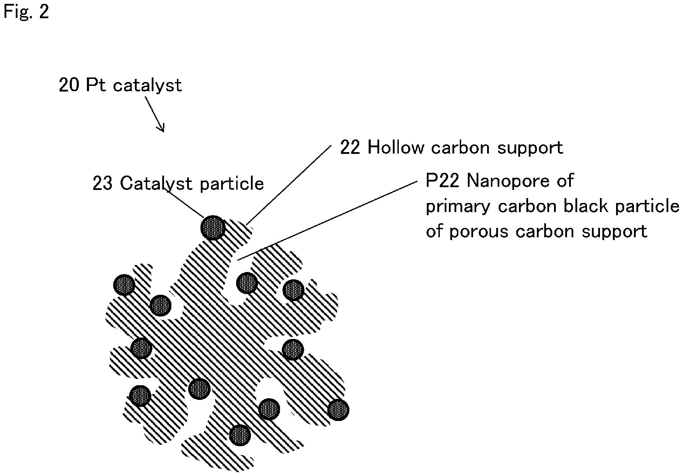

Hereinafter, the preferred embodiment of the electrode catalyst produced by the production method of the present invention will be described with reference to Fig. 2.

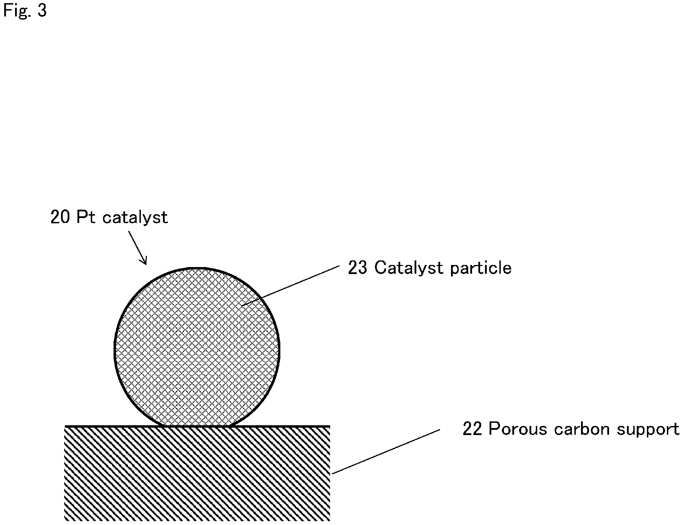

Fig. 2 is a schematic cross-sectional view showing a preferred embodiment of the electrode catalyst (Pt/C catalyst) included in at least one of the cathode catalyst layer 1c and the anode catalyst layer 2c of the MEA10 shown in Fig. 1. Further, Fig.3 is an enlarged schematic cross-sectional view showing a schematic configuration of the electrode catalyst 20 shown in Fig. 2.

As shown in Figs. 2 and 3, the electrode catalyst 20 includes a support 22, which is a porous carbon support, and a catalyst particle 23, which is supported on the support 22.

Further, the electrode catalyst 20 shown in Fig. 2 to Fig. 3 preferably satisfies the following conditions from the viewpoint of more reliably obtaining the effect of the present invention.

Here, the catalyst particles 23 are made of Pt (0 valence). However, a layer of Pt oxide may be formed on the surface of the catalyst particles 23 as long as the effects of the present invention can be obtained.

The electrode catalyst 20 preferably has an average value of crystallite size of 3 to 16.0 nm as measured by powder X-ray diffraction (XRD).

Here, the catalyst particles 23 are made of Pt (0 valence). However, a layer of Pt oxide may be formed on the surface of the catalyst particles as long as the effects of the present invention can be obtained.

Further, a Pt supporting ratio of the electrode catalyst 20 is preferably 5.6 to 66.5 wt%.

The support 22 is a porous carbon support that has nanopores having a pore diameter of 1 to 20 nm, micropores having a pore diameter of less than 1 nm, and a BET specific surface area (nitrogen adsorption specific surface area) of 1000 to 1500 $m^2$/g. Furthermore, the support 22 is preferably made of CNovel (available from Toyo Tanso Co., Ltd., trade name, registered trademark). In the following, the case where CNovel is adopted as the support 22 will be described.

As shown in Fig. 2, in the present embodiment, the support 22 (CNovel, available from Toyo Tanso Co., Ltd., trade name, registered trademark) has the nanopores P22 (pore diameter of 1 to 20 nm) and the micropores P24 (pore diameter is less than 1 nm) and a carbonaceous wall forming the outline of the nanopore P22. The carbonaceous wall has a portion forming a layered structure, and furthermore, the carbonaceous wall forms a three-dimensional network structure.

Crystallinity is developed in the portion of the layered structure in the carbonaceous wall.

Usually, the layered structure is produced by heat-treating the carbon material at a certain temperature or higher. However, in general, since a carbon material shrinks during the heat treatment, the pore tends to collapse and the specific surface area tends to decrease, and thus, when crystallinity develops, it is difficult to obtain a porous carbon having a high specific surface area.

On the other hand, since the support 22 has the nanopores P22 and the carbonaceous wall forming the outline of the nanopore P22, it is possible to withstand the shrinkage during the heat treatment, and the layered structure is sufficiently formed in the carbonaceous walls, and the specific surface area is sufficiently secured.

Further, since the carbonaceous wall has the three-dimensional network structure, the support 22 can support the catalyst particles as small as several nanometers in a highly dispersed state, and is suitable as a support for the catalyst layer of the fuel cell. The support 22 does not need to have the layered structure in the entire carbonaceous wall, and may partially have an amorphous portion.

Further, it is preferable that the support 22 has a specific surface area of 200 m$^2$/g to 1500 m$^2$/g. When the specific surface area is 200 m$^2$/g or more, it becomes easier to form the three-dimensional network structure more reliably. Thereby, the pores can be sufficiently formed, and it becomes easier to have sufficient gas adsorption ability. On the other hand, when the specific surface area is 1500 m$^2$/g or less, it becomes easier to form the carbonaceous wall more reliably. Thereby it becomes easier to sufficiently form the nanopores P22.

Here, in the support 22, the nanopore P22 is an open pore, and has the structure in which the pore portions are continuously connected. When having the structure, the reaction gas can flow smoothly in the catalyst layer (catalyst layer 1c or catalyst layer 2c).

From the viewpoint of having sufficient electrical conductivity, the support 22 preferably has a specific resistance of $10.0 \times 10^2$ Ω·cm or less, more preferably $5.0 \times 10^2$ Ω·cm or less, and further preferably $1.0 \times 10^2$ Ω·cm or less.

Further, the support 22 may contain the micropores having a pore diameter of less than 1 nm (relatively small pores among pores classified as so-called micropore), and the pores having a pore diameter of more than 20 nm to not more than 50 nm (relatively large pores among pores classified as so-called mesopores), within the range where the effects of the present invention can be obtained.

Furthermore, it is preferable that the support 22 is a porous carbon support having good dispersibility in the gas diffusion electrode forming composition which includes the catalyst for electrode 20 and excellent electrical conductivity.

Here, as shown in Fig. 2, the catalyst particle 23 is supported both inside the nanopores P22 of the support 22 and outside the nanopores P22.

The method of producing the electrode catalyst 20 is not particularly limited and can be produced by a known method except that the support 22 and the raw material of the catalyst particle 23 are used, the "first step" and the "second step" described later are essentially included, and further the "nitric acid treatment step" described later is preferably included.

In the first step, a powder in which the catalyst particles 23 are supported on the support 22 is prepared.

In the first step, the pretreatment of the support may be carried out. For example, the support 22 is put into an ultrapure water, and further a pH adjuster is added to prepare a dispersion whose pH is adjusted to 2 to 5. Furthermore, the temperature of the dispersion is kept at 80 to 99 °C, preferably 90 to 99 °C for a predetermined time while stirring (however, the state of not boiling is maintained). Then, the temperature of the dispersion is lowered to room temperature.

Thus, the gas inside the nanopore P22 of the support 22 is removed, so that ultrapure water can sufficiently enter into inside the nanopore P22. Thereby, when adding the raw material of Pt after that, it is preferable that the Pt raw material is sufficiently held inside the nanopore P22 of the support 22, and thus, a large number of precursors of the Pt catalyst particle are supported inside the nanopore P22 of the support 22.

Note that "ultrapure water" used as the preparation of the aqueous solution in the first step is water in which the specific resistance R (reciprocal of the electric conductivity measured by the JIS standard test method (JIS K0552)) represented by the following the equation (1) is 3.0 M Ω·cm or more. In addition, it is preferable that "ultrapure water" has a quality equivalent to "A3" or a clean quality equivalent to or higher than that of "A3" defined in "JISK0557 water used for testing of water and waste".

This ultrapure water is not particularly limited as long as it has an electric conductivity satisfying the relation represented by the following equation (1). For example, ultrapure water produced using an ultrapure water producing apparatus "Milli-Q Series" (available from Merck Co., Ltd.) and "Elix UV Series" (available from Nippon Millipore Co., Ltd.) can be mentioned as the above ultrapure water.

$$R = 1 / \rho \ \dots \ (1)$$

In the above equation (1), R represents a specific resistance, and $\rho$ represents an electric conductivity measured by a JIS standard test method (JIS K0552).

Next, an aqueous solution of a water-soluble Pt salt dissolved in ultrapure water is added at room temperature to the dispersion liquid of the support 22 obtained through the pretreatment of the support 22.

In this step, an aqueous solution prepared by dissolving a water-soluble Pt salt (N.E. CHEMCAT CORPORATION, trade name "A-salt" (Fe component concentration: 8 ppm or less)) in pure water is added to the dispersion of the support 22 obtained through the pretreatment of the support 22.

The next step of the "Pt adding step" is the "reduction step". In the "reduction step", the temperature of the liquid to which the Pt salt is added is raised to 50 °C or higher, and an aqueous solution in which a water-soluble reducing agent (preferably an acidic water-soluble reducing agent) is dissolved is added. After the addition of the reducing agent, the liquid temperature is maintained at 50 °C or higher for a predetermined period of time to allow the reduction reaction to proceed, and then the temperature of the liquid is lowered to room temperature.

Next, the solid component and the liquid component in the liquid obtained through the reduction treatment are separated, and the solid content (a mixture of a Pt/C catalyst and other impurities) is washed. For example, the solid component in the liquid obtained through the "reduction step" may be separated from the liquid component by using a filtering means such as filter paper or a filter cloth. The solid content may be washed with the above-mentioned ultrapure water, a pure water (specific resistance R represented by the above equation (1) is 0.1 MΩcm or more and less than 3.0 MΩcm), or a pure warm water (temperature of pure water being 40 to 80 °C) may be used. For example, when the pure warm water is used, the filtrate is washed repeatedly until the electrical conductivity after washing becomes less than 10 μS/cm.

Next, water is separated from the solid component (mixture of Pt/C catalyst and water) obtained through the washing treatment described above. First, the solid component is air-dried, and then dried in a dryer at a predetermined temperature for a predetermined time (drying step).

The next step after the "drying step" is the "crushing step". In this "crushing step", the solid component (Pt/C catalyst) obtained from the "drying step" is crushed to the catalyst powder with a crushing means such as a mixer.

Next, a second step is conducted. In the second step, the powder obtained through the first step is accommodated in a flow-type reactor, while flowing ammonia gas through the reactor under conditions of a concentration of 10 to 100% and a pressure of 0.1 MPa to 0.5 MPa, and the temperature in the reactor is regulated to 500 °C or more and less than the decomposition temperature of ammonia and kept for 5 to 10 hours to chemically react the powder and the ammonia gas.

The concentration of the ammonia gas in the ammonia treatment in the second step is 10 to 100%. When adjusting the concentration of the ammonia gas within this range, the surface modification of the catalyst powder can be sufficiently proceeded.

Furthermore, the pressure of the ammonia gas in the ammonia treatment of the second step is 0.1 MPa to 0.5 MPa. When adjusting the pressure of the ammonia gas within this range, the modification of the surface of the catalyst powder can be sufficiently proceeded without deteriorating the catalyst powder. From the viewpoint of simplifying the structure of the reactor, the pressure of the ammonia gas is preferably 0.1 MPa to 0.2 MPa, more preferably 0.1 MPa.

Further, the temperature in the reactor in the ammonia treatment in the second step is adjusted to 500 °C or more and less than the decomposition temperature of ammonia. When adjusting the temperature in the reactor in the ammonia treatment within this range, the modification of the surface of the catalyst powder can be sufficiently proceeded.

Furthermore, the ammonia treatment in the second step is maintained at the reaction temperature described above for 5 to 10 hours. When adjusting the reaction time within this period, the modification of the surface of the catalyst powder can be sufficiently proceeded without deteriorating the catalyst powder.

Further, in the present invention, the "nitric acid treatment step" may be further included between the first step and the second step.

In the nitric acid treatment step, the powder obtained through the first step is dispersed in an aqueous nitric acid solution of 0.01 to 1.5 mol/L, and the resulting dispersion is held at 60 to 95 °C for 1 to 3 hours while stirring. Furthermore, when carrying out the nitric acid treatment step, after the nitric acid treatment step, it is necessary to further include a washing step (second washing step) where the solid component and the liquid component in the dispersion are separated, and the solid component is washed with ion-exchanged water one or more times, and a drying step (second drying step) where the solid components obtained through the washing step are filtered and then dried into powder.

The present inventors consider that, in the nitric acid treatment step, by treating the powder obtained through the first step (powder in which the catalyst particles are supported on the porous carbon) appropriately with nitric acid, it is possible to modifying the organic groups (including -COOH, -CHO, =C=O, -OH, etc.)which exist on the surface of the powder partially, and the organic groups can be newly expressed (appropriately increased) on the surface of the powder, and thus the further modification of the powder surface can be made more effective by the second step of ammonia treatment which is achieved in the next step.

In the nitric acid treatment, it is preferable that the concentration of the nitric acid aqueous solution is 0.01 to 1.5 mol/L. When setting the concentration within this range, it is possible to proceed the modification of the surface of the catalyst powder with nitric acid sufficiently without oxidative deterioration of the catalyst powder. Further, it is preferable that the nitric acid treatment temperature is 60 to 95° C., and it is preferable that the nitric acid treatment time within this temperature range is 1 to 3 hours. When adjusting the nitric acid treatment temperature and time within these ranges, it is possible to proceed the modification of the surface of the catalyst powder with nitric acid sufficiently without oxidative deterioration of the catalyst powder.

The washing step (second washing step) and the drying step (second drying step) subsequent to the nitric acid treatment, may be carried out in the same procedures as in the washing step and the drying step in the first step described above.

The polymer electrolyte (ionomer) contained in the catalyst layer 1c and the catalyst layer 2c is not particularly limited as long as it has hydrogen ion conductivity, and known ones can be used. For example, the polymer electrolyte can exemplify a known perfluorocarbon resin having a sulfonic acid group and a carboxylic acid group. Examples of easily available polymer electrolytes having hydrogen ion conductivity include Nafion (registered trademark, available from DuPont), Aciplex (registered trademark, available from Asahi Kasei Co., Ltd.), and Flemion (registered trademark, available from Asahi Glass Co., Ltd.).

Then, at least one of the catalyst layer 1c of the cathode 1 and the catalyst layer 2c of the anode 2 shown in Fig. 1 has a mass ratio I/C of the mass I of the polymer electrolyte (ionomer) to the mass C of the support 22 of 0.5 to 1.2, and more preferably a mass ratio I/C of 0.7 to 1.0.

(Gas Diffusion Layer (GDL))

The gas diffusion layer 1gd provided in the cathode 1 shown in Fig. 1 is a layer provided for supplying an oxidant gas (e.g., oxygen gas, air) to the catalyst layer 1c. In addition, the gas diffusion layer 1gd serves to support the catalyst layer 1c.

In addition, the gas diffusion layer 2gd provided in the anode 2 is a layer provided for supplying a reducing agent gas (e.g., hydrogen gas) to the catalyst layer 2c. And, the gas diffusion layer 2gd serves to support the catalyst layer 2c.

The gas diffusion layer (1gd) shown in Fig. 1 has a function and structure to pass hydrogen gas or air (oxygen gas) well to reach the catalyst layer. Therefore, it is preferable that the gas diffusion layer has water repellency. For example, the gas diffusing layer has a water repellent component such as polyethylene terephthalate (PTFE).

The member which can be used for the gas diffusion layer (1gd) is not particularly limited, and a known member can be used. For example, preferably, there are exemplified carbon paper and other material, in which carbon paper is used as a main material and auxiliary materials including carbon powder, ion-exchanged water, and a polyethylene terephthalate dispersion as a binder is applied on the carbon paper.

(Water Repellent Layer (MPL))

As shown in Fig. 1, a water repellent layer (MPL) 1m is arranged between the gas diffusion layer 1gd and the catalyst layer 1c at the cathode 1. The water repellent layer 1m has electronic conductivity, water repellency, and gas diffusing property, and is provided for facilitating diffusion of the oxidant gas into the catalyst layer 1gd and discharge of the reaction product water generated in the catalyst layer 1gd. The configuration of the water repellent layer 1m is not particularly limited, and a known configuration can be employed.

(Polymer Electrolyte Membrane (PEM))

The polymer electrolyte membrane (PEM) 3 shown in Fig. 1 is not particularly limited as long as it has hydrogen ion conductivity, and a known one conventionally used in PEFC can be employed. For example, it may be a membrane including as a constituent a polymer electrolyte exemplified above as ones contained in the catalyst layer 1c and the catalyst layer 2c.

<Modified embodiment of MEA>

While a preferred embodiment of the MEA of the present invention (and the catalyst layer of the present invention, the gas diffusion electrode of the present invention) is described above, the MEA of the present invention is not limited to the configuration of the MEA 10 shown in Fig. 1.

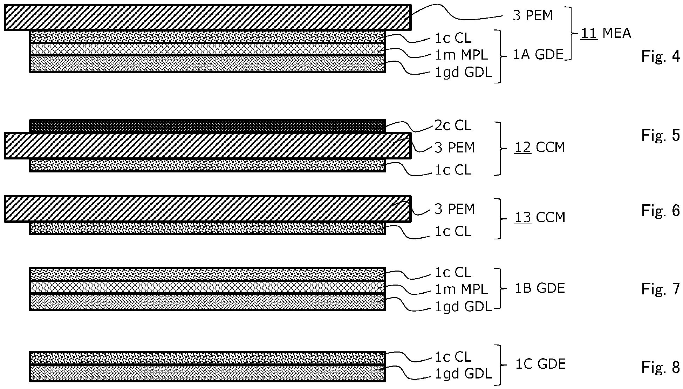

For example, the MEA of the present invention may have the configuration of the MEA 11 shown in Fig. 4.

Fig. 4 is a schematic cross-sectional view illustrating another preferred embodiment of the MEA of the present invention. The MEA 11 shown in Fig. 4 has a configuration in which the gas diffusing electrode (GDE) 1A having the same configuration as that of the cathode 1 in the MEA10 shown in Fig. 1 is arranged on only one side of the polymer electrolyte membrane (PEM) 3. However, the catalyst layer 1c of the gas diffusion electrode (GDE) 1A has a configuration of the catalyst layer of the present invention. That is, the catalyst layer 1c of the GDE 1A has a mass ratio N/C of the mass N of the polymer electrolyte to the mass C of the support 22 of the catalyst for electrode 20 of 0.5 to 1.2, more preferably 0.7 to 1.0.

<Membrane-electrode Assembly (CCM)>

Next, a preferred embodiment of the membrane-electrode assembly (CCM) of the present invention will be described.
Fig. 5 is a schematic cross-sectional view showing a preferred embodiment of the CCM of the present invention. The CCM 12 shown in Fig. 5 has a configuration in which a polymer electrolyte membrane (PEM) 3 is arranged between the cathode catalyst layer 1c and the anode catalyst layer 2c. Then, at least one of the cathode catalyst layer 1c and the anode catalyst layer 2c has a configuration of the catalyst layer of the present invention. In other words, at least one of the cathode catalyst layer 1c and the anode catalyst layer 2c has a mass ratio I/C of the mass I of the polymer electrolyte (ionomer) to the mass C of the support of the electrode catalyst 20 of 0.5 to 1.2, more preferably 0.7 to 1.0.

<Modified embodiment of Membrane-electrode Assembly (CCM)>

While a preferred embodiment of the CCM of the present invention has been described above, the CCM of the present invention is not limited to the configuration of the CCM 12 shown in Fig. 5.
For example, the CCM of the present invention may have a configuration of the CCM 13 shown in Fig. 6.
Fig. 7 is a schematic cross-sectional view illustrating another preferred embodiment of the CCM of the present invention. The CCM 13 shown in Fig. 6 has a configuration in which the catalyst layer 1c having the same configuration as that of the cathode 1 in the CCM 12 shown in Fig. 5 is arranged on only one side of the polymer electrolyte membrane (PEM) 3. However, the catalyst layer 1c of the gas diffusion electrode (GDE) 1A has a configuration of the catalyst layer of the present invention. In other words, the catalyst layer 1c of the CCM 13 has a mass ratio N/C of the mass N of the polymer electrolyte to the mass C of the support of the electrode catalyst 20 of 0.5 to 1.2, more preferably 0.7 to 1.0.

<Gas Diffusion Electrode (GDE)>

Next, a preferred embodiment of the gas diffusion electrode (GDE) of the present invention will be described.
Fig. 8 is a schematic cross-sectional view showing a preferred embodiment of the GDE of the present invention. The gas diffusion electrode (GDE) 1B shown in Fig. 7 has the same configuration as that of the cathode 1 mounted on the MEA 10 shown in Fig. 1. However, the catalyst layer 1c of the gas diffusion electrode (GDE) 1B has a configuration of the catalyst layer of the present invention. In other words, the catalyst layer 1c of the gas diffusion electrode (GDE) 1B has a mass ratio I/C of the mass I of the polymer electrolyte (ionomer) to the mass C of the support 22 of the electrode catalyst 20 of 0.5 to 1.2, more preferably 0.7 to 1.0.

<Modified embodiment of Gas Diffusion Electrode (GDE)>

While a preferred embodiment of the GDE of the present invention has been described above, the GDE of the present invention is not limited to the configuration of the GDE 1B shown in Fig. 7.
For example, the GDE of the present invention may have the composition of GDE 1C shown in Fig. 8.

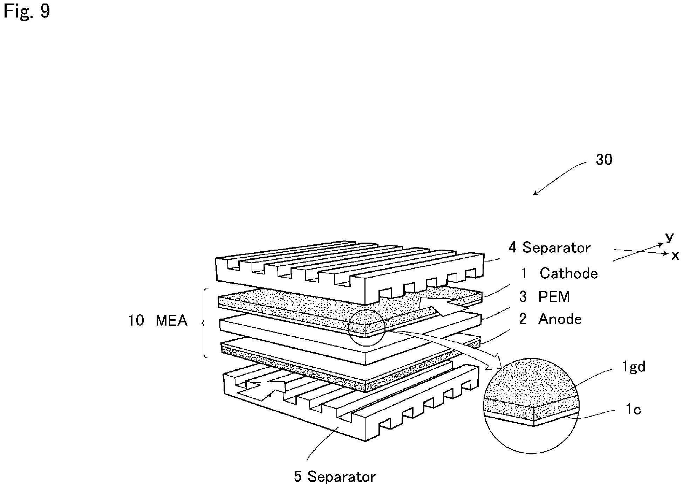

Fig. 9 is a schematic cross-sectional view illustrating another preferred embodiment of the GDE of the present invention. The GDE 1C shown in Fig. 8 has a configuration in which the water repellent layer (MPL) is not arranged between the catalyst layer 1c and the gas diffusion layer 1gd as compared with the GDE 1B shown in Fig. 8.

<Composition for Forming Catalyst Layer>

Next, a preferred embodiment of the composition for forming catalyst layer of the present invention will be described.
A composition for forming catalyst layer of the present embodiment includes the electrode catalyst 20, a polymer electrolyte, and a main component, and has a mass ratio I/C of mass I of polymer electrolyte (ionomer) to mass C of support 22 of the electrode catalyst 20 of 0.5 to 1.2, more preferably 0.7 to 1.0.
Here, the composition of the liquid including the polymer electrolyte (ionomer) is not particularly limited. For example, a liquid including a polymer electrolyte may contain a polymer electrolyte having hydrogen ion conductivity described above, water, and an alcohol.
The composition ratio of the electrode catalyst 20, the polymer electrolyte, and other components (water, alcohol, and the like) included in the composition for forming catalyst layer is appropriately set so that the dispersion state of the electrode catalyst 20 in the obtained catalyst layer becomes good and the power generation performance of the MEA 10 including the catalyst layer can be improved.

The composition for forming catalyst layer can be prepared by mixing a liquid including the electrode catalyst 20 and the polymer electrolyte and stirring the mixture. From the viewpoint of adjusting applicability, a polyhydric alcohol such as glycerin and/or water may be contained. When the liquid including the electrode catalyst 20, the polymer electrolyte is mixed, a pulverizing and mixing machine such as a ball mill, an ultrasonic disperser and the like can be used.

At least one of the catalyst layer 1c of the cathode 1 and the catalyst layer 2c of the anode 2 shown in Fig. 1 can be formed using a preferred embodiment of the composition for forming catalyst layer of the present invention.

(Method for Producing Gas Diffusion Electrode)

Next, an example of a method of producing gas diffusion electrode of the present invention will be described. It is sufficient that the gas diffusion electrode is formed so as to include the catalyst layer of the present invention, and a known method can be employed for the producing method. It can be more reliably produced by using the composition for forming catalyst layer of the present invention.

For example, it may be produced by coating a composition for forming catalyst layer on a gas diffusion layer (or a water repellent layer of a laminate in which a water repellent layer is formed on a gas diffusion layer) and drying the composition.

<Fuel Cell Stack>

Fig. 9 is a schematic diagram illustrating one preferred embodiment of the fuel cell stack of the present invention.

The fuel cell stack 30 illustrated in Fig. 9 has a configuration in which the MEA 10 shown in Fig. 1 is a unit cell and a plurality of the unit cells are stacked. Further, the fuel cell stack 30 has a configuration in which the MEA10 is arranged between the separator 4 and the separator 5. A gas flow passage is formed in the separator 4 and the separator 5, respectively.

EXAMPLE

The present invention is further illustrated by the following examples, which are not intended to limit the present invention.

(I) Preparation of the electrode catalyst to be used for the catalyst layer of the cathode of MEA

(1) Production of Pt/C catalyst to be used for the cathode of MEA of Example 1 [Pt catalyst particle-supported carbon catalyst "Pt/C catalyst" powder]

Powder of Pt/C catalyst powder in which catalyst particles made of Pt are supported on the following support {Pt supporting ratio 48.0 wt%, trade name "SA50BM-207", available from N.E. CHEMCAT CORPORATION)} was prepared.

The powder of this Pt/C catalyst (hereinafter, referred to as "Pt/C catalyst A" as needed) was prepared in the following procedures.

(First step-support pretreatment)

A dispersion liquid, in which a porous carbon support available from by Toyo Tanso Co., Ltd., trade name: "CNovel A" (BET specific surface area: 1200 $m^2$/g) was dispersed in the aqueous solution adjusted to pH = 2 to 5 (prepared by adding a pH adjuster to ultrapure water), was held at 90 to 99 °C for about 0.5 hours while stirring (although a not boiled state was retained).

Note that "ultrapure water" used in this first step (support pretreatment step) was a water having a specific resistance R (reciprocal of electric conductivity measured by a JIS standard test method (JIS K0552)) represented by the following equation (2) of 3.0 MΩcm or more. In addition, ultrapure water had a water quality equivalent to or higher than that of A3 specified in JISK0557 Water for Testing Water and Wastewater.

This ultrapure water was produced using an ultrapure water producing apparatus "Milli-Q Series" (available from Merck Co., Ltd.) and "Elix UV Series" (available from Nippon Millipore Co., Ltd.).

$$R = 1 / \rho \ldots (2)$$

In the above general equation (2), R represents a specific resistance, and $\rho$ represents an electric conductivity measured by a JIS standard test method (JIS K0552).

(First step-Pt addition treatment)

After preparing a mixed solution by adding an aqueous solution of a water-soluble Pt salt (N.E. CHEMCAT CORPORATION, trade name "A-salt" (Fe component concentration: 8 ppm or less)) in ultrapure water to the dispersion obtained through the support pretreatment step, the pH was adjusted to 7 to 12, and the mixture was stirred while maintaining a predetermined temperature of 50 °C or higher for a predetermined time.

(First step-Pt reduction treatment)

By adding an aqueous solution in which an acidic water-soluble reducing agent is dissolved to the liquid obtained through the Pt addition treatment step, the Pt ions in the mixed liquid were reduced to obtain the Pt catalyst particle-supporting carbon "Pt/C" powder.

(First step-washing treatment)

By using a filter paper, the solid component and the liquid component in the liquid obtained through the washing treatment step were separated. Next, the solid content (a mixture of the Pt/C catalyst and other impurities) remaining on the filter paper was washed with the above-mentioned pure water and pure warm water. First, washing with pure water was performed. This washing was repeated until the electric conductivity of the filtrate after washing became less than 20 $\mu$S/cm. Next, washing with pure warm water was performed. This washing was repeated until the electric conductivity of the filtrate after washing became less than 10 $\mu$S/cm.

(First step-drying step)

The solid component (mixture of Pt/C catalyst and water) on the filter paper obtained through the washing treatment was air-dried in the air in this state. After this air drying, the solid component on the filter paper was transferred to a magnetic dish and dried in an electric dryer at a predetermined temperature of 60 °C or higher for a predetermined time.

(First step-crushing step)

The solid component (Pt/C catalyst) obtained in the drying step was crushed by using a mixer to obtain a powder of Pt/C catalyst A.

(Second step)

The powder (powder of the precursor of Pt/C catalyst A) obtained through the first step was accommodated in a flow-type reactor, while flowing ammonia gas through the reactor under conditions of a concentration of 100% and a pressure of 0.1 MPa, and the temperature in the reactor is regulated to 500 °C and kept for 8 hours. Thereby the Pt/C catalyst A was obtained.

<Measurement of supporting ratio (ICP analysis)>

For this Pt/C catalyst A, the Pt supporting ratio (wt%) was determined by the following methods.
The Pt/C catalyst A was immersed in aqua regia to dissolve the metal. The carbon as the insoluble component was then removed from the aqua regia. Next, the aqua regia from which the carbon was removed was analyzed by ICP.
As a result of the ICP analysis, this Pt/C catalyst A had the Pt supporting ratio of 48.0 wt%.

(2) Preparation of Pt/C catalyst powder used for the cathode of the MEA of Comparative Example 1

As the Pt/C catalyst, a Pt/C catalyst with a Pt supporting rate of 50 wt% available from NE CHEMCAT CORPORATION (trade name: " SA50BK", hereinafter referred to as "Pt/C catalyst B" as needed) was prepared. As the support of the Pt/C catalyst B, a commercially available porous carbon support {available from Lion Corporation, trade name "Carbon ECP" (registered trademark) (Ketjen Black EC300J), specific surface area 750 to 800 m$^2$/g} was used.

(II) Preparation of P/C catalyst used for the anodes of the MEA of Example 1 and Comparative Example 1

The Pt/C catalyst which is the same as the Pt/C catalyst B used for the cathode of the MEA of Comparative Example 1was used as a P/C catalyst for the anode of the MEA of Example 1, Comparative Example 1.

<Example 1>

An MEA having the same structure as the MEA 10 shown in Fig. 1 was produced by the following procedure.

(1) Preparation of anode

Ink for forming catalyst layer of the anode

1.0 g of the Pt/C catalyst and the ion-exchanged water in an amount of a mass ratio of 8 times the carbon mass of the catalyst were added to a container of a zirconia ball mill. Next, the zirconia beads were added and mixed and stirred in a planetary ball mill.
Next, ethanol in an amount of a mass twice as large as that of the ion-exchanged water put into the ball mill was added to the ball mill. Next, the materials inside the ball mill were mixed again with agitation. After that, 5 wt% Nafion (available from Sigma-Aldric, trade name "D521 Nafion™ Dispersion Alcohol based: 5 wt% (registered trademark)") was added so that I/C = 0.7, and mixed and stirred again. The mixed paste was dispensed into PFA cups (with lids) and tumble-mixed overnight on a roll mill.

Coating an ink for forming the catalyst layer of the cathode onto the electrolyte membrane

The ink for forming the catalyst layer of the cathode was filled in the syringe portion of a pulse swirl spray coating device (available from Nordson). The ink ejection pressure was set to 13 to 15 kPa, and the liquid in the syringe was constantly circulated in order to prevent the paste from depositing during the operation of the spray coating device. After that, the ink was applied by pulse spraying to a polymer electrolyte membrane (available from DuPont, trade name "Nafion NR212") having an anode on the back surface. The coating amount was adjusted so that the supported amount of platinum was $0.3$ mg/cm$^2$. Further, the ink workbench was heated to 60 °C to suppress the volatilization speed of the solvent and the occurrence of cracks. An anode CCM was obtained by the above operation.

(2) Preparation of cathode

Ink for forming the catalyst layer of the cathode

0.5 g of the Pt/C catalyst and the ion-exchanged water in an amount of a mass ratio of 8 times the carbon mass of the catalyst were added to a container of a zirconia ball mill. Next, the zirconia beads were added and mixed and stirred in a planetary ball mill.
Next, ethanol in an amount of a mass four times as large as that of the ion-exchanged water put into the ball mill was added to the ball mill. Next, the materials inside the ball mill were mixed again with agitation. After that, 5 wt% Nafion (available from Sigma-Aldric, trade name "D521 Nafion™ Dispersion Alcohol based: 5 wt% (registered trademark)") was added so that I/C = 0.7, and mixed and stirred again. The mixed paste was dispensed into PFA cups (with lids) and tumble-mixed overnight on a roll mill.

Coating an ink for forming the catalyst layer of the cathode onto the electrolyte membrane

The ink for forming the catalyst layer of the cathode was filled in the syringe portion of a pulse swirl spray coating device (available from Nordson). The ink ejection pressure was set to 13 to 15 kPa, and the liquid in the syringe was constantly circulated in order to prevent the paste from depositing during the operation of the spray coating device. After that, the ink was applied by pulse spraying to the back surface of a polymer electrolyte membrane (the anode CCM produced above) having an anode. The coating amount was adjusted so that the supported amount of platinum was 0.1 mg/cm$^2$. Further, the ink workbench was heated to 60 °C to suppress the volatilization speed of the solvent and the occurrence of cracks. A CCM was obtained by the above operation. The CCM was dried overnight in an environment of about 60 °C.

(3) Preparation of MEA

The above CCM was sandwiched between two Teflon sheets to form a laminate. Next, the laminate was placed on a hot press plate and heated to 140 °C. When the plate was heated to 140 °C, a pressure of 2.86 kN was applied and pressed for 3 minutes. After the pressing, the Teflon sheet was carefully peeled off so that the catalyst layer would not peel off from the polymer electrolyte membrane. Thereby a CCM was produced.
Next, a laminate (MEA) placed between two GDLs of the CCM was produced.

Carbon paper (available from SGL Carbon, trade name "SIGRACET 22BB (registered trademark)") was used for the two GDLs.

<Comparative Example 1>

An MEA was produced under the same conditions and procedures as in Example 1, except that as the porous carbon support, a commercially available porous carbon support {available from Lion Corporation, trade name "Carbon ECP" (registered trademark) (Ketjen Black EC300J), specific surface area 750 to 800 $m^2$/g} was used, and that the ammonia treatment conditions in the second step were not performed in the production of the electrode catalyst.

<Comparative Example 2>

An MEA was produced under the same conditions and procedures as in Example 1, except that as the porous carbon support, a commercially available porous carbon support {available from Lion Corporation, trade name "Carbon ECP" (registered trademark) (Ketjen Black EC300J), specific surface area 750 to 800 $m^2$/g} was used, and that the ammonia treatment conditions in the second step were not performed in the production of the electrode catalyst where the conditions were changed in the followings.

- In the first step-support pretreatment step, the pH of the aqueous solution that the support is dispersed was adjusted to 9 to 13.
- In the first step-Pt reduction step, an alkaline water-soluble reducing agent was used.

<Comparative Example 3>

An MEA was produced under the same conditions and procedures as in Example 1, except that the ammonia treatment conditions in the second step were changed to the conditions shown in Table 1 in the production of the electrode catalyst.

<Comparative Example 4>

Each MEA was produced under the same conditions and procedures as in Example 1, except that, instead of the porous carbon used in Example 1, a solid carbon (available from DENKA Co., Ltd., trade name "Denka Black", the same specific surface area as the porous carbon used in Example 1) was used.

<Comparative Example 5>

An MEA was produced under the same conditions and procedures as in Example 1, except that the ammonia treatment conditions in the second step were changed to the conditions shown in Table 1 in the production of the electrode catalyst.

<Comparative Example 6>

An MEA was produced under the same conditions and procedures as in Comparative Example 2, except that the following conditions were changed in the production of the electrode catalyst.

- The ammonia treatment conditions of the second step in Comparative Example 2 were not carried out.
- Before the first step, the carbon support was subjected to the ammonia treatment under the same conditions as in the second step of Example 2. Next, an MEA was produced under the same conditions and procedures as in the first step of Example 1, except that the ammonia-treated carbon support was used.

<Comparative Example 7>

An MEA was produced under the same conditions and procedures as in Comparative Example 2, except that the following conditions were changed in the production of the electrode catalyst.

- The ammonia treatment conditions of the second step in Comparative Example 2 were not carried out.
- Before the first step, the carbon support was subjected to the ammonia treatment under the same conditions as in Comparative Example 3 except that the conditions were changed to the conditions shown in Table 2. Next, the first step was conducted under the same conditions and procedures as in the first step of Example 1, except that the ammonia-treated carbon support was used.

- The following nitric acid treatment step was carried out between the first step and the second step. The powder obtained after the first step was dispersed in an aqueous nitric acid solution (0.1 mol/L), and the obtained dispersion was kept at 95 °C for 2 hours while stirring (nitric acid treatment step). Next, after the nitric acid treatment step, the solid component and the liquid component in the dispersion were separated, and the solid component was washed with the ion-exchanged water (washing step). The washing was carried out until the ion conductivity of the drained ion-exchanged water discharged after washing the solid components became 10 $\mu$S/cm or less. Finally, the solid component obtained through the washing step was separated by filtration and further dried to obtain a powder (drying step).

<Comparative Example 8>

An MEA was produced under the same conditions and procedures as in Comparative Example 2, except that the following conditions were changed in the production of the electrode catalyst.

- The ammonia treatment conditions of the second step in Comparative Example 2 were not carried out.
- Before the first step, the carbon support was subjected to the ammonia treatment under the same conditions as in Comparative Example 4. Next, the first step was conducted under the same conditions and procedures as in the first step of Comparative Example 2, except that the ammonia-treated carbon support was used.
- The nitric acid treatment step was carried out under the same conditions as in Comparative Example 7 between the first step and the second step.

<Comparative Example 9>

An MEA was produced under the same conditions and procedures as in Comparative Example 2, except that the following conditions were changed during the production of the electrode catalyst.

- The ammonia treatment conditions of the second step in Comparative Example 2 were not carried out.
- Before the first step, the carbon support was subjected to the ammonia treatment under the same conditions as in Comparative Example 6, except changing to the conditions shown in Table 2. Next, the first step was conducted under the same conditions and procedures as in the first step of Comparative Example 2, except that the ammonia-treated carbon support was used.
- The nitric acid treatment step was carried out under the same conditions as in Comparative Example 7 between the first step and the second step.

<Cell performance evaluation>

The cell performance of the MEAs of Example 1 and Comparative Example 1 to Comparative Example 9 was carried out by the following cell performance evaluation method.
The MEAs of Example 1 and Comparative Example 1 to Comparative Example 9 were set in a fuel cell unit cell evaluation device.

(1) MEA initial performance evaluation test

Next, the power generation reaction in the MEA was proceeded under the following conditions.
The temperature of the unit cell (MEA) was set to 80 °C. The anode was supplied with pure hydrogen humidified with saturated water vapor of 1.0 atm. Further, the cathode was supplied with pure oxygen humidified with saturated water vapor of 1.0 atm at 80 °C. Hydrogen and oxygen were adjusted so that the stoichiometric ratio is (hydrogen / oxygen) = (1.5 / 2.5). Further, hydrogen and air were adjusted so that the stoichiometric ration is (hydrogen / air) = (1.5 / 12.5).
Evaluation of the unit cells (MEA) was performed by controlling the current by an electronic loading device attached to the fuel cell unit cell evaluation device, and the current-voltage curves (IV curve) obtained by scanning the current values were acquired as data.
The X-axis (current density) from the data of the current-voltage curves was plotted as a logarithmic scale to obtain a graph (not shown), and a current density value at a voltage 850 mV (current value per unit area of the electrode) was obtained.
By dividing the current density value thus obtained by the platinum weight per unit area of the cathode, it was calculated as the activity per unit weight (mass activity: Mass. Act.) for platinum contained in the cathode, and was used as an indicator of the oxygen reduction ability of the catalyst contained in the cathode. The results are shown in Table 1 and Table 2.

In Table 1 and Table 2, the results of comparing Mass. Act. obtained in the other examples and comparative examples as a relative value (relative ratio) using Mass. Act. obtained in Comparative Example 1 as a reference (1.0) are shown.

(2) Measurement of ECSA (electrochemically effective surface area) for the catalyst of the cathode

With respect to the MEAs of Example 1, Comparative Example 1, Comparative Example 2 and Comparative Example 5, the cyclic voltammetry measurement (cell temperature: 40 °C, potential sweep rate: 20 mV/sec) was performed on the cathode before conducting the MEA initial performance evaluation test, to measure the initial ECSA (ECSA1). The results are shown in Table 1.

(3) Measurement of Pt utilization rate of cathode

With respect to the MEAs of Example 1, Comparative Example 1, Comparative Example 2 and Comparative Example 5, using the crystallite diameter measured by XRD of the catalyst particles of the catalyst layer of the cathode and the measured value of the MSA (CO), the theoretical specific surface area of the catalyst particle was calculated. Then, using ECSA1 described above, the Pt utilization rate (catalyst utilization rate) = 100 × (ECSA1) / (Theoretical specific surface area) was obtained. The results are shown in Table 1.

[Table 1]

| | MEA initial performance evaluation test ($H_2/O_2$) | | | | | | | |
|---|---|---|---|---|---|---|---|---|
| | Structure of cathode electrode catalyst | Support of cathode electrode catalyst | Cathode Electrode catalyst Ammonia treatment in second step | Nitric acid treatment step | Relative value of Mass. Act. @850mV | UPt Pt utilization rate @BOL % | Supported amount of cathode g/cm² | Supported amount of anode g/cm² |
| Ex. 1 | Pt/C | Cnovel | NH₃ 100%, 0.1MPa, 500°C, 8h | No | 2.0 | 63 | 0.10 | 0.30 |
| Com. Ex. 1 | Pt/C | Carbon ECP | No | No | 1.0 | 34 | 0.10 | 0.30 |
| Com. Ex. 2 | Pt/C | Carbon ECP | NH₃ 100%, 0.1MPa, 500°C, 8h | No | 1.6 | 69 | 0.10 | 0.30 |
| Com. Ex. 3 | Pt/C | Carbon ECP | NH₃ 100%, 0.5MPa, 500°C, 8h | No | 1.5 | | 0.10 | 0.30 |
| Com. Ex. 4 | Pt/C | Solid carbon | NH₃ 100%, 0.1MPa, 500°C, 8h | No | 0.9 | | 0.10 | 0.30 |
| Com. Ex. 5 | Pt/C | Cnovel | No | No | 1.5 | 29 | 0.10 | 0.30 |

[Table 2]

| | MEA initial performance evaluation test (H$_2$/O$_2$) | | | | | | |
|---|---|---|---|---|---|---|---|
| | Structure of cathode electrode catalyst | Support of cathode electrode catalyst | Cathode Carbon support Ammonia treatment | Nitric acid treatment step | Relative value of Mass. Act. @850mV | Supported amount of cathode g/cm$^2$ | Supported amount of anode g/cm$^2$ |
| Com. Ex. 6 | Pt/C | Carbon ECP (NH$_3$treated) | NH$_3$ 100%, 0.1MPa, 500°C,8h | No | 1.3 | 0.10 | 0.30 |
| Com. Ex. 7 | Pt/C | Carbon ECP (NH$_3$treated) | NH$_3$ 10%, 0.1MPa, 600°C, over 8h | Do | 0.5 | 0.10 | 0.30 |
| Com. Ex. 8 | Pt/C | Carbon ECP (NH$_3$treated) | NH$_3$ 100%, 0.1MPa, 500°C,8h | Do | 0.5 | 0.10 | 0.30 |
| Com.Ex. 9 | Pt/C | Carbon ECP (NH$_3$treated) | NH$_3$ 10%, 0.36MPa, 600°C,over 8h | Do | 1.3 | 0.10 | 0.30 |

From the results shown in Table 1 and Table 2, it has become clear that the MEA of Example 1 had superior catalytic activity compared to the MEAs of Comparative Example 1 to Comparative Example 9.

Further, it was found that the MEA of Example 1 had a greatly improved Pt utilization rate as compared with the MEAs of Comparative Example 1 and Comparative Example 5. From this result, it was found that in Example 1, the ionomers were dispersed in a good state in the catalyst layer and many catalyst active sites were formed, as compared with Comparative Example 1 and Comparative Example 5. Therefore, it was found that the MEA according to Example 1 had excellent catalytic activity and excellent durability as compared with the MEAs according to Comparative Example 1 and Comparative Example 5.

Furthermore, from the results of the MEAs of Example 1 and the MEAs of Comparative Example 6 to Comparative Example 9, it has been confirmed that the production method of the present invention in which the ammonia treatment is carried out after supporting the catalyst particles on the support is more effective than the conventional production method in which the support is first treated with ammonia as described in Non-Patent Document 1 and Non-Patent Document 2.

INDUSTRIAL APPLICABILITY

According to the present invention, the electrode catalyst that exhibits excellent catalytic activity and excellent durability can be produced.

Further, according to the present invention, the GDE and the CCM with excellent polarization characteristics and durability, and MEA with excellent power generation performance and durability can be produced.

Therefore, the present invention can be applied not only to the electrical equipment industry such as a fuel cell, a fuel cell vehicle and a portable mobile but also to ENE-FARM, a cogeneration system and the like and, therefore, contributes to the development of energy industry and environmental technology.

EXPLANATION OF NUMERALS

1... Cathode,
1A, 1B, 1C... Gas diffusion electrode (GDE),
1c... Catalytic layer (CL),
1m... Water repellent layer (MPL),
1gd... Gas diffusion layer (GDL),

2... Anode,
2c... Catalytic layer (CL),
2m... Water repellent layer (MPL),
2gd... Gas diffusion layer (GDL),
3... Polymer electrolyte membrane (PEM),
4, 5... Separator,
10, 11... Membrane-electrode assembly (MEA),
12, 13... Membrane catalyst layer assembly (CCM),
20... Pt/C catalyst,
22... Support,
23... Catalyst particle,
30... Fuel cell stack,
P22... Nanopores of the support.

**Claims**

1.  A method of producing an electrode catalyst having a porous carbon support that has nanopores having a pore diameter of 1 to 20 nm and a BET specific surface area (nitrogen adsorption specific surface area) of 700 to 900 $m^2$/g, and catalyst particles containing Pt supported on the support, the method including:

    a first step for preparing a powder in which the catalyst particles are supported on the support by using the support and raw materials of the catalyst particle; and
    a second step for accommodating the powder obtained through the first step in a flow-type reactor, flowing ammonia gas through the reactor under conditions of a concentration of 10 to 100% and a pressure of 0.1 MPa to 0.5 MPa, and regulating the temperature in the reactor to 500 °C or more and less than the decomposition temperature of ammonia, keeping for 5 to 10 hours to chemically react the powder and the ammonia gas.

2.  The method of producing an electrode catalyst according to claim 1, further comprises:

    between the first step and the second step;
    a nitric acid treatment step where the powder obtained through the first step is dispersed in an aqueous nitric acid solution of 0.01 to 1.5 mol/L, and the resulting dispersion is held at 60 to 95 °C for 1 to 3 hours while stirring;
    after the nitric acid treatment step, a washing step where the solid component and the liquid component in the dispersion are separated, and the solid component is washed with ion-exchanged water one or more times; and
    a drying step where the solid components obtained through the washing step are filtered and then dried into powder.

3.  The method of producing an electrode catalyst according to claim 1 or 2, wherein the catalyst particle is a catalyst particle made of Pt (0 valence).

4.  The method of producing an electrode catalyst according to claim 3, wherein the catalyst particles further contain a Pt oxide.

5.  The method of producing an electrode catalyst according to claim 1 or 2, wherein the catalyst particle is a catalyst particle made of a PtNi alloy.

6.  The method of producing an electrode catalyst according to claim 1 or 2, wherein the catalyst particle have a core-shell structure having a core particle and a Pt-containing shell which covers at least part of the surface of the core particle.

7.  A method of producing a gas diffusion electrode having a catalyst layer and a gas diffusion layer for supplying a reaction gas to the catalyst layer, which comprises

    a step of producing an electrode catalyst by performing the method of any one of claims 1 to 6, and
    a step of preparing an ink for forming a catalyst layer which contains at least the electrode catalyst thus-produced, a solid polymer electrolyte (ionomer), and a dispersion medium.

8.  A method of producing a membrane-electrode assembly (MEA) having an anode, a cathode, and a polymer electrolyte membrane disposed between the anode and the cathode, in the method of producing a membrane-electrode assembly (MEA),

> a step of producing a gas diffusion electrode by performing the method of claim 7, and
> using the gas diffusion electrode thus-produced for at least one of the anode and the cathode.

**Patentansprüche**

1. Verfahren zur Herstellung eines Elektrodenkatalysators mit einem porösen Kohlenstoffträger, der Nanoporen mit einem Porendurchmesser von 1 bis 20 nm und eine spezifische Oberfläche nach dem BET-Verfahren (spezifische Stickstoffadsorptionsoberfläche) von 700 bis 900 $m^2$/g aufweist, und von Katalysatorpartikeln, die auf dem Träger getragenes Pt enthalten, wobei das Verfahren Folgendes umfasst:

> einen ersten Schritt des Herstellens eines Pulvers, in dem die Katalysatorpartikel auf dem Träger getragen sind, unter Verwendung des Trägers und von Rohmaterialien des Katalysatorpartikels; und
> einen zweiten Schritt des Einbringens des durch den ersten Schritt erhaltenen Pulvers in einen Reaktor vom Strömungstyp, wobei Ammoniakgas unter Bedingungen mit einer Konzentration von 10 bis 100 % und einem Druck von 0,1 MPa bis 0,5 MPa und einer Regelung der Temperatur im Reaktor auf 500 °C oder mehr und weniger als die Zersetzungstemperatur von Ammoniak durch den Reaktor strömt, und Haltens für 5 bis 10 Stunden, um das Pulver und das Ammoniakgas chemisch umzusetzen.

2. Verfahren zur Herstellung eines Elektrodenkatalysators nach Anspruch 1, das weiters Folgendes umfasst: zwischen dem ersten Schritt und dem zweiten Schritt:

> einen Salpetersäure-Behandlungsschritt, bei dem das durch den ersten Schritt erhaltene Pulver in einer wässrigen Salpetersäurelösung mit 0,01 bis 1,5 mol/l dispergiert wird und die resultierende Dispersion 1 bis 3 Stunden lang unter Rühren auf 60 bis 95 °C gehalten wird;
> nach dem Salpetersäure-Behandlungsschritt einen Waschschritt, bei dem der feste Bestandteil und der flüssige Bestandteil in der Dispersion getrennt werden und der feste Bestandteil einmal oder mehrmals mit ionenausgetauschtem Wasser gewaschen wird; und
> einen Trocknungsschritt, bei dem die durch den Waschschritt erhaltenen festen Bestandteile filtriert und dann zu Pulver getrocknet werden.

3. Verfahren zur Herstellung eines Elektrodenkatalysators nach Anspruch 1 oder 2, wobei das Katalysatorpartikel ein Katalysatorpartikel aus Pt (Wertigkeit 0) ist.

4. Verfahren zur Herstellung eines Elektrodenkatalysators nach Anspruch 3, wobei die Katalysatorpartikel weiters ein Pt-Oxid enthalten.

5. Verfahren zur Herstellung eines Elektrodenkatalysators nach Anspruch 1 oder 2, wobei das Katalysatorpartikel ein Katalysatorpartikel aus einer PtNi-Legierung ist.

6. Verfahren zur Herstellung eines Elektrodenkatalysators nach Anspruch 1 oder 2, wobei die Katalysatorpartikel eine Kern-Hülle-Struktur mit einem Kernpartikel und einer Pt-hältigen Hülle aufweisen, die zumindest einen Teil der Oberfläche des Kernpartikels bedeckt.

7. Verfahren zur Herstellung einer Gasdiffusionselektrode mit einer Katalysatorschicht und einer Gasdiffusionsschicht zur Zufuhr eines Reaktionsgases zur Katalysatorschicht, das Folgendes umfasst:

> einen Schritt des Herstellens eines Elektrodenkatalysators durch Ausführen eines Verfahrens nach einem der Ansprüche 1 bis 6 und
> einen Schritt des Herstellens einer Druckfarbe zur Ausbildung einer Katalysatorschicht, die zumindest den so hergestellten Elektrodenkatalysator, einen festen Polymerelektrolyt (Ionomer) und ein Dispersionsmedium enthält.

8. Verfahren zur Herstellung einer Membran-Elektrode-Anordnung (MEA) mit einer Anode, einer Kathode und einer zwischen der Anode und der Kathode angeordneten Polymerelektrolytmembran, wobei das Verfahren zur Herstellung einer Membran-Elektrode-Anordnung (MEA) Folgendes umfasst:

> einen Schritt des Herstellens einer Gasdiffusionselektrode durch Ausführen eines Verfahrens nach Anspruch 7 und
> Verwenden der so hergestellten Gasdiffusionselektrode für zumindest eines aus der Anode und der Kathode.

## Revendications

1. Procédé de production d'un catalyseur d'électrode présentant un support de carbone poreux qui présente des nanopores présentant un diamètre de pore de 1 à 20 nm et une surface spécifique BET (surface spécifique d'adsorption d'azote) de 700 à 900 m$^2$/g, et des particules de catalyseur contenant du Pt supportées sur le support, le procédé incluant :

   une première étape pour préparer une poudre dans laquelle les particules de catalyseur sont supportées sur le support en utilisant le support et les matières premières de la particule de catalyseur ; et
   une seconde étape pour recevoir la poudre obtenue lors de la première étape dans un réacteur de type à écoulement, pour faire circuler de l'ammoniac gazeux à travers le réacteur dans des conditions d'une concentration de 10 à 100 % et d'une pression de 0,1 MPa à 0,5 MPa, et pour réguler la température dans le réacteur à 500°C ou plus et moins que la température de décomposition de l'ammoniac, avec conservation pendant 5 à 10 heures afin de faire réagir chimiquement la poudre et l'ammoniac gazeux.

2. Procédé de production d'un catalyseur d'électrode selon la revendication 1, comprend en outre :

   entre la première étape et la seconde étape ;
   une étape de traitement à l'acide nitrique où la poudre obtenue à travers la première étape est dispersée dans une solution aqueuse d'acide nitrique de 0,01 à 1,5 mol/L, et la dispersion résultante est maintenue entre 60 et 95°C pendant 1 à 3 heures sous agitation ;
   après l'étape de traitement à l'acide nitrique, une étape de lavage où le composant solide et le composant liquide dans la dispersion sont séparés, et le composant solide est lavé avec de l'eau ayant subi un échange d'ions une ou plusieurs fois ; et
   une étape de séchage où les composants solides obtenus via l'étape de lavage sont filtrés puis séchés en poudre.

3. Procédé de production d'un catalyseur d'électrode selon la revendication 1 ou 2, dans lequel la particule de catalyseur est une particule de catalyseur constituée de Pt (valence 0).

4. Procédé de production d'un catalyseur d'électrode selon la revendication 3, dans lequel les particules de catalyseur contiennent en outre un oxyde de Pt.

5. Procédé de production d'un catalyseur d'électrode selon la revendication 1 ou 2, dans lequel la particule de catalyseur est une particule de catalyseur constituée d'un alliage de PtNi.

6. Procédé de production d'un catalyseur d'électrode selon la revendication 1 ou 2, dans lequel la particule de catalyseur présente une structure noyau-enveloppe présentant une particule de noyau et une enveloppe contenant du Pt qui recouvre au moins une partie de la surface de la particule de noyau.

7. Procédé de production d'une électrode à diffusion de gaz présentant une couche de catalyseur et une couche de diffusion de gaz pour fournir un gaz de réaction à la couche de catalyseur, qui comprend

   une étape de production d'un catalyseur d'électrode en mettant en œuvre le procédé selon l'une quelconque des revendications 1 à 6, et
   une étape de préparation d'une encre pour former une couche de catalyseur qui contient au moins le catalyseur d'électrode ainsi produit, un électrolyte polymère solide (ionomère) et un milieu de dispersion.

8. Procédé de production d'un ensemble membrane-électrodes (MEA) présentant une anode, une cathode et une membrane d'électrolyte polymère disposée entre l'anode et la cathode, dans le procédé de production d'un ensemble membrane-électrodes (MEA),

une étape de production d'une électrode à diffusion de gaz en mettant en œuvre le procédé selon la revendication 7, et
d'utilisation l'électrode de diffusion de gaz ainsi produite pour au moins une de l'anode et de la cathode.

Fig. 1

Fig. 2

20 Pt catalyst

23 Catalyst particle

22 Hollow carbon support

P22 Nanopore of
primary carbon black particle
of porous carbon support

Fig. 3

20 Pt catalyst

23 Catalyst particle

22 Porous carbon support

EP 4 293 757 B1

3 PEM

1c CL
1m MPL — 1A GDE
1gd GDL

11 MEA

Fig. 4

2c CL
3 PEM — 12 CCM
1c CL

Fig. 5

3 PEM — 13 CCM
1c CL

Fig. 6

1c CL
1m MPL — 1B GDE
1gd GDL

Fig. 7

1c CL
1gd GDL — 1C GDE

Fig. 8

27

Fig. 9

30

4 Separator

1 Cathode

3 PEM

2 Anode

10 MEA

1gd

1c

5 Separator

y
x

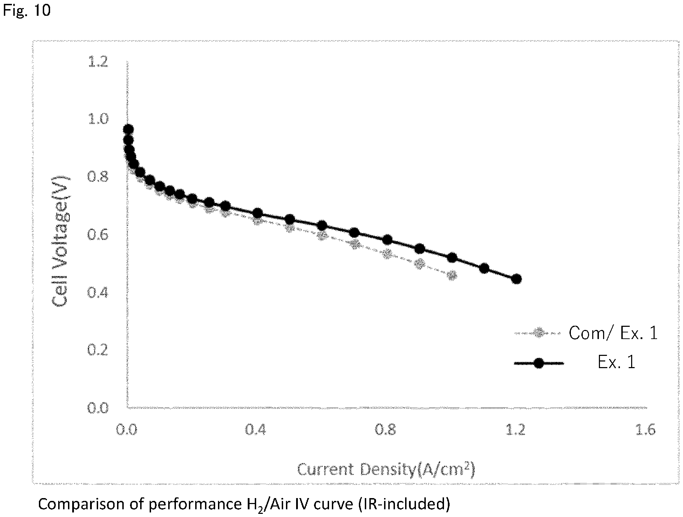

Fig. 10

Comparison of performance H$_2$/Air IV curve (IR-included)

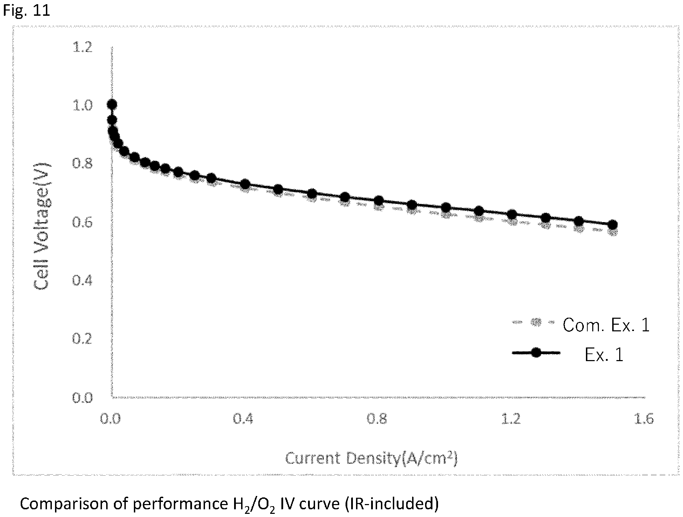

Fig. 11

Comparison of performance $H_2/O_2$ IV curve (IR-included)

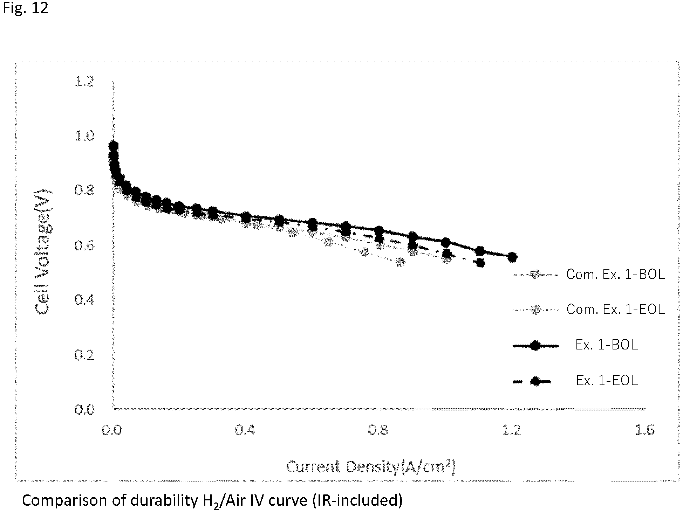

Fig. 12

Comparison of durability H$_2$/Air IV curve (IR-included)

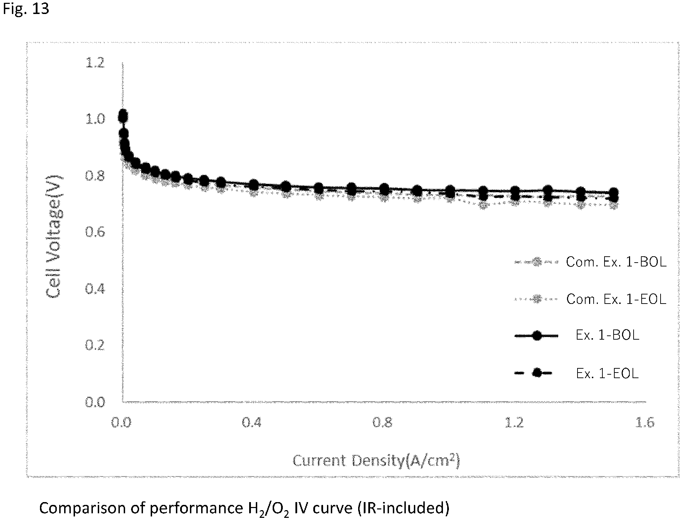

Fig. 13

Comparison of performance $H_2/O_2$ IV curve (IR-included)

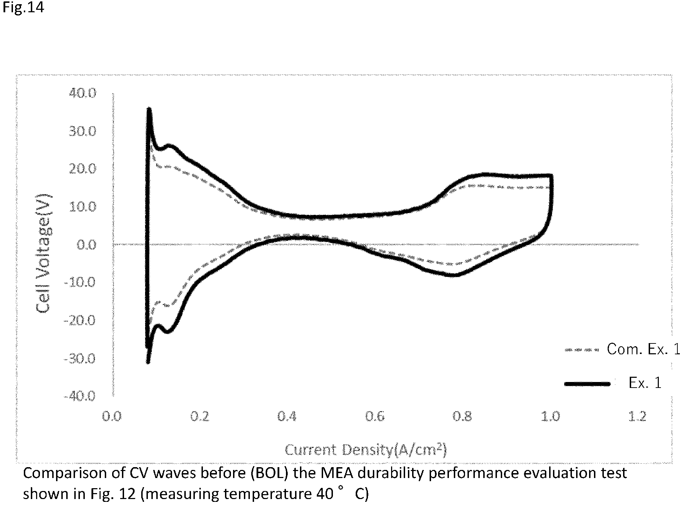

Fig.14

Comparison of CV waves before (BOL) the MEA durability performance evaluation test shown in Fig. 12 (measuring temperature 40 ° C)

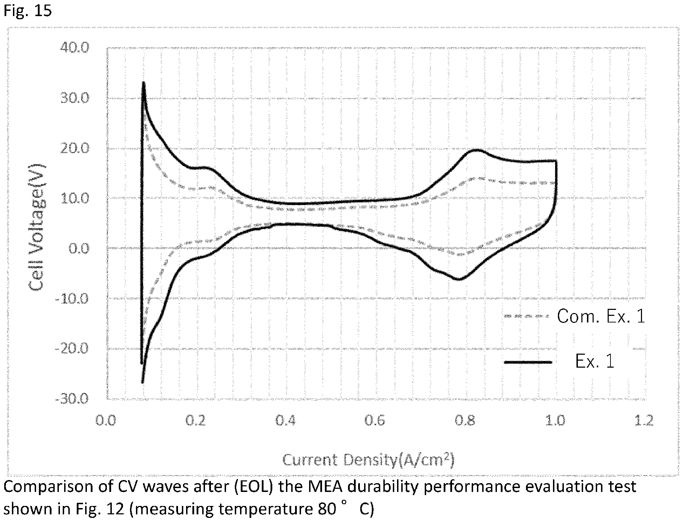

Fig. 15

Comparison of CV waves after (EOL) the MEA durability performance evaluation test shown in Fig. 12 (measuring temperature 80 ° C)

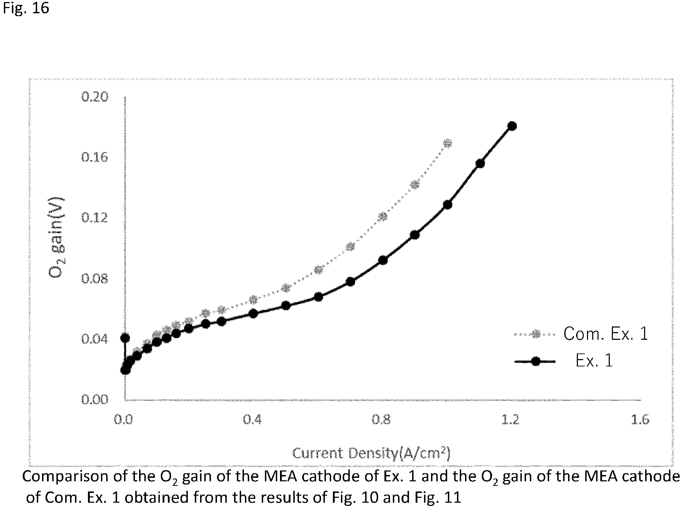

Fig. 16

Comparison of the $O_2$ gain of the MEA cathode of Ex. 1 and the $O_2$ gain of the MEA cathode of Com. Ex. 1 obtained from the results of Fig. 10 and Fig. 11

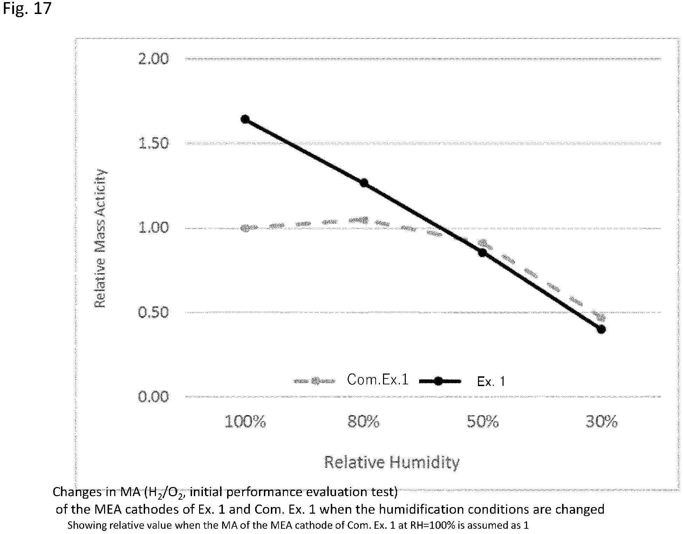

Fig. 17

Changes in MA ($H_2/O_2$, initial performance evaluation test)
of the MEA cathodes of Ex. 1 and Com. Ex. 1 when the humidification conditions are changed
Showing relative value when the MA of the MEA cathode of Com. Ex. 1 at RH=100% is assumed as 1

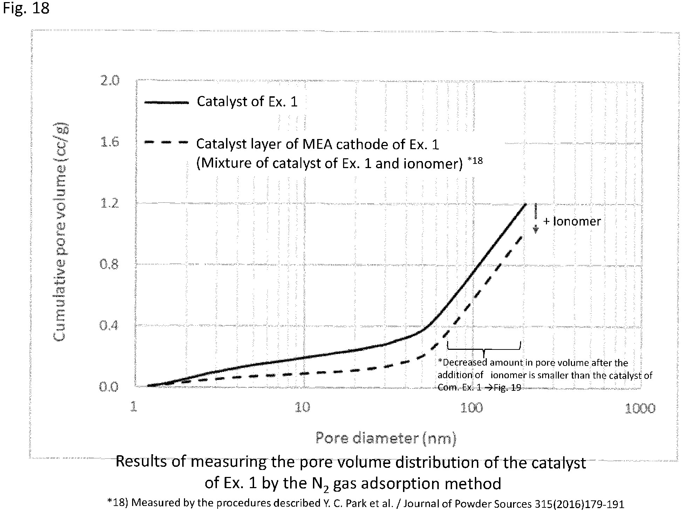

Fig. 18

Results of measuring the pore volume distribution of the catalyst
of Ex. 1 by the $N_2$ gas adsorption method

*18) Measured by the procedures described Y. C. Park et al. / Journal of Powder Sources 315(2016)179-191

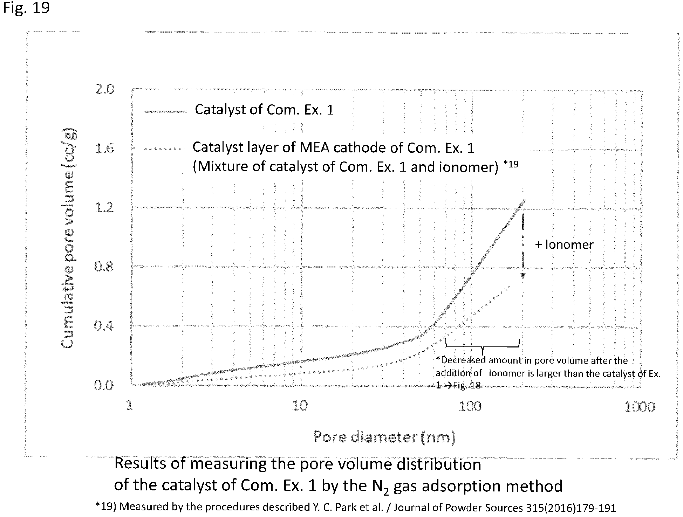

Fig. 19

Results of measuring the pore volume distribution
of the catalyst of Com. Ex. 1 by the $N_2$ gas adsorption method

*19) Measured by the procedures described Y. C. Park et al. / Journal of Powder Sources 315(2016)179-191

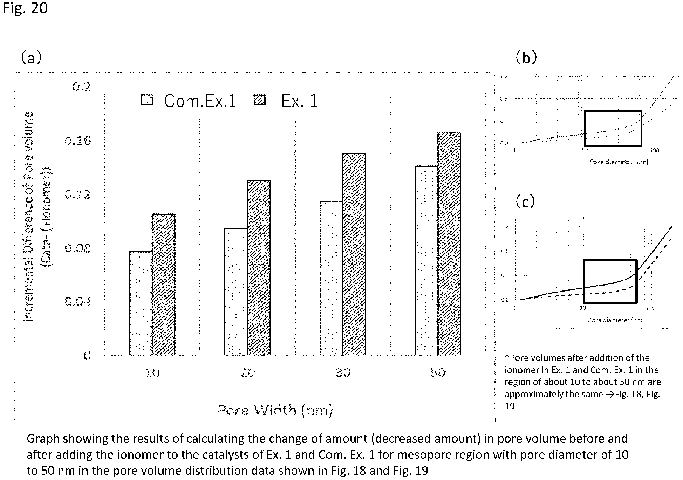

Fig. 20

(a)

(b)

(c)

*Pore volumes after addition of the ionomer in Ex. 1 and Com. Ex. 1 in the region of about 10 to about 50 nm are approximately the same →Fig. 18, Fig. 19

Graph showing the results of calculating the change of amount (decreased amount) in pore volume before and after adding the ionomer to the catalysts of Ex. 1 and Com. Ex. 1 for mesopore region with pore diameter of 10 to 50 nm in the pore volume distribution data shown in Fig. 18 and Fig. 19

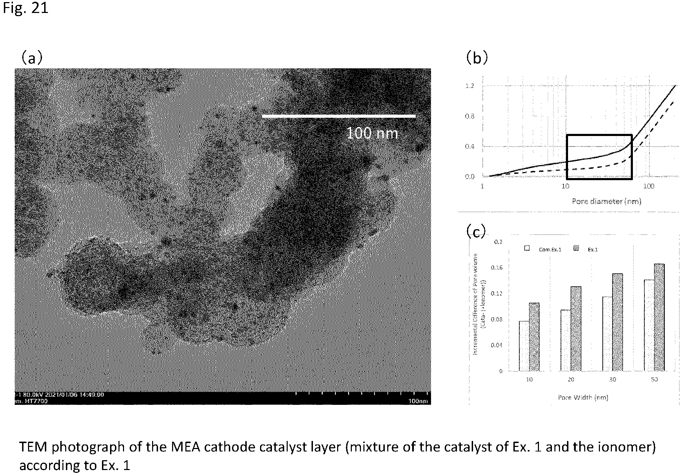

Fig. 21

（a）

（b）

（c）

TEM photograph of the MEA cathode catalyst layer (mixture of the catalyst of Ex. 1 and the ionomer) according to Ex. 1

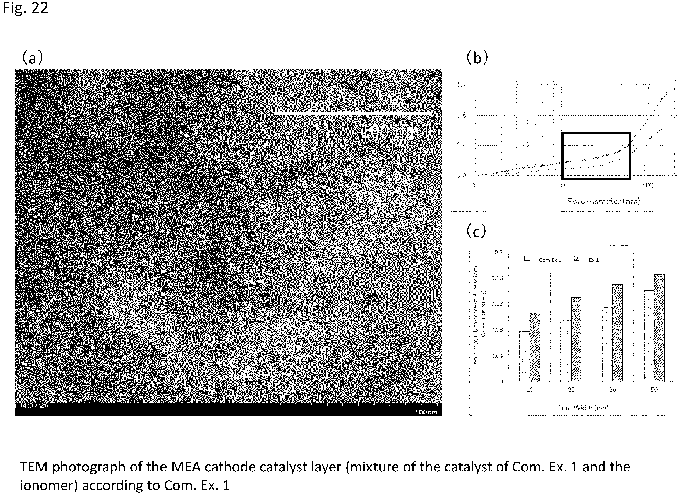

Fig. 22

(a)

(b)

(c)

TEM photograph of the MEA cathode catalyst layer (mixture of the catalyst of Com. Ex. 1 and the ionomer) according to Com. Ex. 1

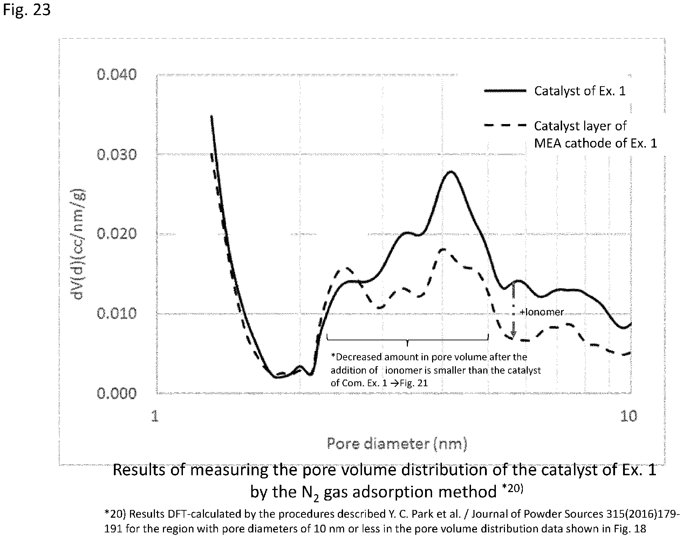

Fig. 23

Results of measuring the pore volume distribution of the catalyst of Ex. 1
by the $N_2$ gas adsorption method [20]

[20] Results DFT-calculated by the procedures described Y. C. Park et al. / Journal of Powder Sources 315(2016)179-191 for the region with pore diameters of 10 nm or less in the pore volume distribution data shown in Fig. 18

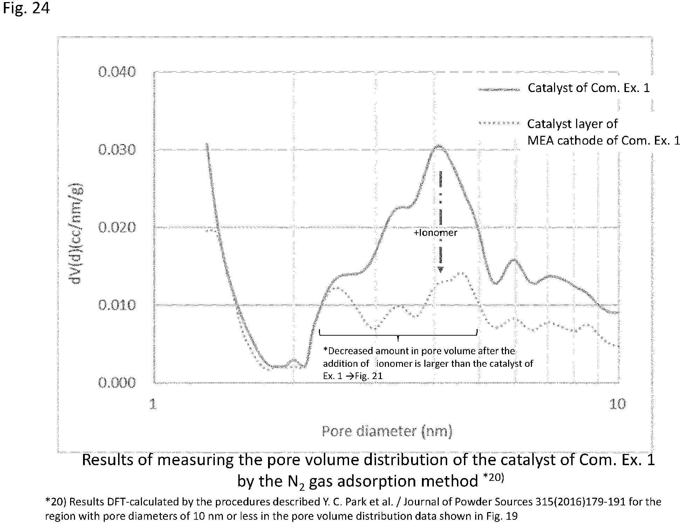

Fig. 24

Results of measuring the pore volume distribution of the catalyst of Com. Ex. 1 by the $N_2$ gas adsorption method [20]

[20] Results DFT-calculated by the procedures described Y. C. Park et al. / Journal of Powder Sources 315(2016)179-191 for the region with pore diameters of 10 nm or less in the pore volume distribution data shown in Fig. 19

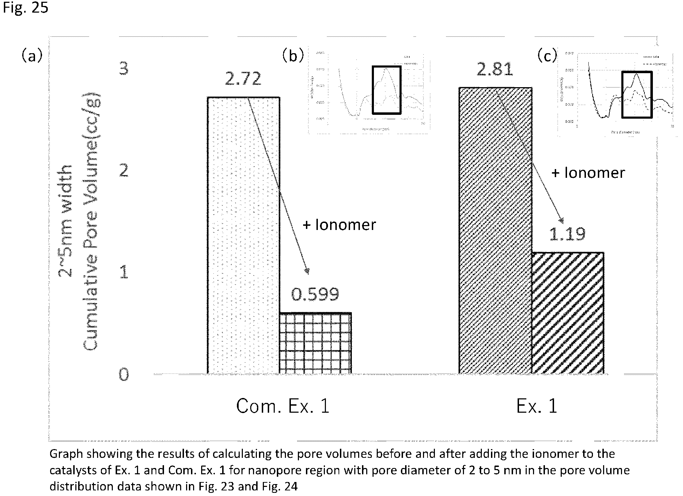

Fig. 25

Graph showing the results of calculating the pore volumes before and after adding the ionomer to the catalysts of Ex. 1 and Com. Ex. 1 for nanopore region with pore diameter of 2 to 5 nm in the pore volume distribution data shown in Fig. 23 and Fig. 24

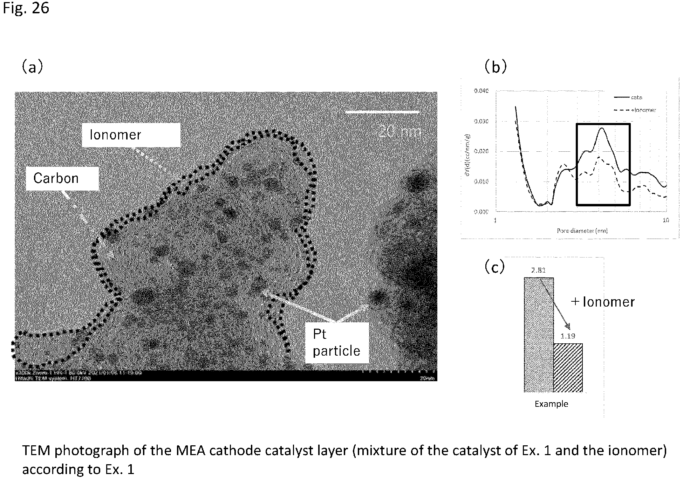

Fig. 26

(a)

(b)

(c)

TEM photograph of the MEA cathode catalyst layer (mixture of the catalyst of Ex. 1 and the ionomer) according to Ex. 1

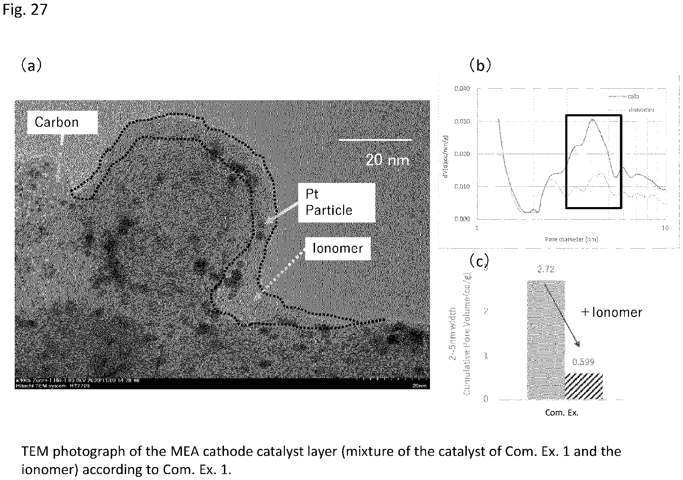

Fig. 27

(a)

(b)

(c)

TEM photograph of the MEA cathode catalyst layer (mixture of the catalyst of Com. Ex. 1 and the ionomer) according to Com. Ex. 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4362116 B
- JP 2013109856 A
- WO 2016063968 A
- WO 2019221168 A
- CA 2764768 A1

**Non-patent literature cited in the description**

- Analysis of Micropore Surface Area by t-plot Method. MCEvatec Co., Ltd, 01 February 2019
- *Journal of The Electrochemical Society*, 2018, vol. 165 (10), F770-F779
- *Nature Materials*, January 2020, vol. 19, 77-85
- *Prog. Mater. Sci.*, 2016, vol. 82, 445
- *Phys. Chem. Chem. Phys.*, 2013, vol. 15 (27), 11236-1124
- **Y.S. KIM et al.** *DOE Hydrogen Program Merit Review and Peer Meeting FC16*, 2009